# EUROPEAN PATENT APPLICATION

(11) **EP 4 485 227 A1**
(43) Date of publication of application: **01.01.2025**
(21) Application number: 22937280.0
(22) Date of filing: 15.12.2022
(51) Int. Cl.: G06F 16/29

(54) **INFORMATION PROCESSING METHOD, RELATED APPARATUS, AND SYSTEM**

(30) Priority: 12.04.2022 CN 202210379605
(71) Applicant: Shenzhen Yinwang Intelligent Technologies Co., Ltd., Shenzhen, Guangdong 518129 (CN)
(72) Inventor: JIANG, Yan, Shenzhen, Guangdong 518129 (CN); FEI, Wenkai, Shenzhen, Guangdong 518129 (CN); LIU, Jianqin, Shenzhen, Guangdong 518129 (CN)
(74) Representative: Maiwald GmbH
(86) International application number: PCT/CN2022/139178
(87) International publication number: WO 2023/197651

(57) **Abstract**

Embodiments of this application provide an information processing method, a related apparatus, and a system. The method includes: An information processing apparatus obtains indication information, where the indication information indicates at least one of the following content: a dynamic/static attribute of a map element in a first space area, an update frequency of map information of the first space area, a data format of the map information of the first space area, and a data processing manner of the map information of the first space area; and generates first map information based on the indication information and sensing information that is from a sensing device, and sends the first map information, where the first map information indicates the map element in the first space area. Some specific space areas are indicated in a targeted manner, so that a same processing manner is not used for all space areas in a map, and data redundancy caused by a processing manner used to consider all map elements can be avoided. This helps relieve pressure on generation, transmission, processing, or the like of map data.

## Description

This application claims priority to Chinese Patent Application No. 202210379605.0, filed with the China National Intellectual Property Administration on April 12, 2022 and entitled "INFORMATION PROCESSING METHOD, RELATED APPARATUS, AND SYSTEM", which is incorporated herein by reference in its entirety.

### TECHNICAL FIELD

This application relates to the map field, and more specifically, to an information processing method, a related apparatus, and a system.

### BACKGROUND

With development of autonomous driving, a high-definition map becomes more important. To ensure security and efficiency of autonomous driving, the high-definition map needs to maintain sufficient freshness and richness.

The high-definition map includes map elements with low timeliness and a low change frequency, such as roads, traffic marking lines, and traffic signs, and includes map elements with high timeliness and a high change frequency, such as road construction and traffic information flows. More abundant map elements and more frequent update requirements on map elements make a map data amount increasingly large. As a result, generation, transmission, processing, and the like of map data are under great pressure.

### SUMMARY

This application provides an information processing method, a related apparatus, and a system, to relieve pressure of a map data amount on generation, transmission, processing, or the like of map data.

According to a first aspect, this application provides an information processing method. The method may be performed by an information processing apparatus, or may be implemented by a logical module or software that can implement all or some functions of an information processing apparatus. This is not limited in this application. For example, the information processing apparatus may include but is not limited to a terminal device, a roadside device, a server, or the like, and a component (for example, a chip or a chip system) configured in a terminal device, a roadside device, a server, or the like.

For example, the method includes: obtaining indication information, where the indication information includes a first information element, and the first information element indicates at least one of the following content: a dynamic/static attribute of a map element in a first space area, an update frequency of map information of the first space area, a data format of the map information of the first space area, and a data processing manner of the map information of the first space area; generating first map information based on the indication information and sensing information that is from a sensing device, where the first map information indicates a first map element in the first space area; and sending the first map information.

It should be understood that the information processing apparatus in the first aspect may correspond to, for example, an information processing apparatus A in the following embodiments. The first map information in the first aspect may correspond to, for example, map information A in the following embodiments, and the first map element in the first aspect may correspond to, for example, a map element A in the following embodiments.

It should be further understood that the first map element in the first map information may be one or more map elements. A quantity of first map elements is not limited in this application. When the first information element indicates at least one of the dynamic/static attribute, the update frequency, the data format, and the data processing manner, map elements or map information of the first space area have/has a same attribute feature. For example, when the first information element indicates the dynamic/static attribute of the map element in the first space area, map elements in the first space area have a same dynamic/static attribute; when the first information element indicates the update frequency of the map information of the first space area, the map information of the first space area is processed or transmitted based on a same update frequency; when the first information element indicates the data format of the map information of the first space area, the map information of the first space area is generated or transmitted based on a same data format; and when the map information of the first space area is based on a same data processing manner, the map information of the first space area is processed based on the same data processing manner.

According to the foregoing technical content, the indication information indicates the map element or the map information of the first space area. The first space area is a space area obtained through division in a map based on an attribute feature of the map element or the map information. Map elements or map information in the area have/has a common attribute feature. The indication information indicates the map element or the map information of the first space area, so that a map information processing apparatus can generate or send the map information in a manner suitable for the common attribute feature. This relieves pressure caused by an excessively large amount of data on generation, transmission, processing, or the like of the map. Specifically, the common attribute feature may be embodied as the dynamic/static attribute of the map element in the first space area, the update frequency of the map information of the first space area, the data format of the map information of the first space area, and the data processing manner of the map information of the first space area. For example, if all map elements in the first space area are dynamic elements, the map information processing apparatus may generate, based on the dynamic/static attribute indicated by the first information element, map information that is of the first space area and that is encoded in a data format indicating the dynamic element; and/or encode or transmit, based on the data format indicated by the first information element, the first map information of the first space area in a data format indicating the dynamic element; and/or process, based on the data processing manner indicated by the first information element, the first map information in a data processing manner suitable for the dynamic element; and/or update or send the first map information based on the update frequency indicated by the first information element. For another example, if all map elements in the first space area are static elements, the map information processing apparatus may generate, based on the dynamic/static attribute indicated by the first information element, map information that is of the first space area and that is encoded in a data format indicating the static element; and/or encode or transmit, based on the data format indicated by the first information element, the first map information of the first space area in a data format indicating the static element; and/or process, based on the data processing manner indicated by the first information element, the map information of the first space area in a data processing manner suitable for the static element; and/or update or send the map information of the first space area based on the update frequency indicated by the first information element. The technical solution reflects division of space areas. Some space areas are indicated in a targeted manner, so that a same processing manner is not used for all space areas in the map, and data redundancy caused by a processing manner used to consider all map elements is avoided. For example, a static element has a small quantity of encoding fields, and a dynamic element has a large quantity of encoding fields. In this case, when map data of a space area having a static attribute is generated, there is no need to add an encoding field that the dynamic element has but the static element does not have. For another example, an update frequency of map information of a static element is low, and an update frequency of map information of a dynamic element is high. In this case, there is no need to use a high sending frequency when map data of a space area having a static attribute is sent.

With reference to the first aspect, in some possible implementations of the first aspect, the indication information further includes a second information element, and the second information element indicates a three-dimensional space range of the first space area.

That is, the first space area is a three-dimensional space area. The second information element in the indication information may be specifically a three-dimensional space expression of the first space area. Therefore, the information processing apparatus may determine the first space area based on the second information element, and then generate the first map information for the three-dimensional space range.

The following provides two possible implementations of generating the first map information based on the indication information and the sensing information.

In a first implementation, the generating first map information based on the indication information and sensing information that is from a sensing device includes: extracting first sensing information within the three-dimensional space range from the sensing information based on the second information element; and generating the first map information based on the first information element and the first sensing information.

The information processing apparatus may extract, from the sensing information, the first sensing information corresponding to the first space area, perform element extraction based on the first sensing information, and generate the first map information based on an extracted map element and the first information element. However, other sensing information in the sensing information may not be processed temporarily. In other words, the information processing apparatus does not need to process and report all sensing information, but processes and reports the first sensing information in a targeted manner, that is, a data processing amount and a data transmission amount can be reduced.

In a second implementation, the generating first map information based on the indication information and sensing information that is from a sensing device includes: performing element extraction based on the sensing information to obtain a map element; extracting the first map element within the three-dimensional space range from the map information based on the second information element; and generating the first map information based on the first information element and the first map element.

The information processing apparatus may first perform element extraction based on the sensing information to obtain map elements, then extract, from the map elements based on the three-dimensional space range of the first space area indicated by the second information element, the first map element corresponding to the first space area, and generate the first map information based on the first map element and the first information element. However, the information processing apparatus may not need to process and report information about other map elements outside the first space area temporarily. Therefore, a data processing amount and a data transmission amount can also be reduced.

It should be understood that the map element is extracted based on the sensing information, and both the first map element and the first sensing information may correspond to the three-dimensional space range of the first space area. Therefore, the map element corresponds to the sensing information, and the first map element corresponds to the first sensing information. A quantity of map elements and a quantity of map elements included in the first map information are not limited in this application.

With reference to the first aspect or a second aspect, in some possible implementations, the obtaining indication information includes: generating the indication information or receiving the indication information.

For example, the information processing apparatus is a server. The server may generate the indication information. For another example, the information processing apparatus is a roadside device, a terminal device, or the like. The roadside device, the terminal device, or the like may receive the indication information from a server. This is not limited in this application.

With reference to the first aspect, in some possible implementations of the first aspect, the dynamic/static attribute is one of a dynamic attribute and a static attribute, or one of a dynamic attribute, a semi-dynamic attribute, a semi-static attribute, and a static attribute.

It should be understood that the dynamic/static attribute is obtained through division based on different change frequencies of map elements in a space area, and may be classified into the dynamic attribute and the static attribute, or the dynamic attribute, the semi-dynamic attribute, the semi-static attribute, and the static attribute based on the different change frequencies. This application includes but is not limited thereto.

Further, when the indication information indicates the dynamic/static attribute, the first map element has the dynamic/static attribute.

It should be understood that the first map element in the first map information may be one or more map elements. A quantity of first map elements is not limited in this application. When the indication information indicates the dynamic/static attribute, first map elements in the first map information each have the dynamic/static attribute indicated by the indication information. In other words, the first map elements in the first map information have a same dynamic/static attribute.

With reference to the first aspect, in some possible implementations of the first aspect, the data format is a data format indicating a static element or a data format indicating a dynamic element.

The data format may be used to define a format of the map information. For example, the data format may be used to define content to be carried in the map information, and a field corresponding to each piece of content; and may be further used to define an encoding manner used by each piece of content to be encoded in the map information.

For example, if the dynamic/static attribute is classified into the dynamic attribute and the static attribute, corresponding data formats may include the data format indicating the dynamic element and the data format indicating the static element. Therefore, a same data format is not used for all space areas in the map to generate the map information, and data redundancy caused by a data format used to consider all map elements is avoided. This helps relieve pressure on generation, transmission, and the like of map data.

Further, when the indication information indicates the data format, the generating first map information includes: generating the first map information having the data format; and/or the sending the first map information includes: sending the first map information in the data format.

The information processing apparatus may generate, based on the data format indicated by the indication information, the first map information that meets a corresponding data format, and may transmit the first map information in a form of the foregoing data format.

In a possible design, data formats one-to-one correspond to dynamic/static attributes.

The information processing apparatus may determine the dynamic/static attribute of the map element in the first space area based on the data format indicated by the indication information, and process and report the first map information based on the dynamic/static attribute and a corresponding update frequency and/or data processing manner. That is, the indication information may implicitly indicate the dynamic/static attribute of the map element in the first space area, the update frequency and the data processing manner of the map information of the first space area, and the like while indicating the data format. This can reduce signaling overheads of the indication information.

It should be understood that data formats may alternatively not one-to-one correspond to dynamic/static attributes. For example, the semi-static attribute, the semi-dynamic attribute, and the dynamic attribute may correspond to a same data format; for another example, the semi-static attribute and the static attribute correspond to one data format, and the semi-dynamic attribute and the dynamic attribute correspond to another data format; or the like. When the data formats do not one-to-one correspond to the dynamic/static attributes, the data format cannot implicitly indicate the dynamic/static attribute, the update frequency, the data processing manner, and the like of the map information of the first space area.

With reference to the first aspect, in some possible implementations of the first aspect, when the indication information indicates the update frequency, the sending the first map information includes: sending the first map information based on the update frequency.

The information processing apparatus may send the first map information based on the update frequency indicated by the indication information. In other words, different update frequencies may be used for space areas with different dynamic/static attributes to send the map information.

As described above, different dynamic/static attributes may correspond to different update frequencies, and different dynamic/static attributes may also correspond to different data formats and different data processing manners. Therefore, the indication information may implicitly indicate the dynamic/static attribute of the map element in the first space area, the data format and the data processing manner of the map information of the first space area, and the like while indicating the update frequency. This can reduce signaling overheads of the indication information.

It should be understood that update frequencies may alternatively not one-to-one correspond to dynamic/static attributes. For example, the semi-static attribute, the semi-dynamic attribute, and the dynamic attribute may correspond to a same update frequency. For another example, the semi-static attribute and the static attribute correspond to one update frequency, and the semi-dynamic attribute and the dynamic attribute correspond to another update frequency; and the like. When the update frequencies do not one-to-one correspond to the dynamic/static attributes, the update frequency cannot implicitly indicate the dynamic/static attribute of the map element in the first space area, the data format of the map information of the first space area, the data processing manner of the map information of the first space area, and the like.

With reference to the first aspect, in some possible implementations of the first aspect, the method further includes: receiving second map information, where the second map information indicates a second map element in the first space area. When the first information element indicates at least one of the dynamic/static attribute, the data format, and the data processing manner, the method further includes: obtaining information about the second map element from the second map information based on the indication information; and when the first information element indicates the update frequency, the receiving second map information includes: receiving the second map information based on the update frequency.

It should be understood that the second map information in the first aspect may correspond to, for example, map information B and/or map information C in the following embodiments, and the second map element in the first aspect may correspond to, for example, a map element B and/or a map element C in the following embodiments.

The information processing apparatus may receive map information of the first space area from another device, for example, the second map information, and may process or receive the second map information based on information indicated by the first information element. For example, if all map elements in the first space area are dynamic elements, the information processing apparatus may obtain information about the dynamic element from the second map information based on the at least one of the dynamic/static attribute, the data format, and the data processing manner indicated by the first information element; and/or decode, based on the data format indicated by the first information element, the second map information in the data format indicating the dynamic element; and/or receive the second map information based on the update frequency indicated by the first information element. For another example, if all map elements in the first space area are static elements, the information processing apparatus may obtain information about the dynamic element and information about the static element from the second map information based on the at least one of the dynamic/static attribute, the data format, and the data processing manner indicated by the first information element; and/or decode, based on the data format indicated by the first information element, the second map information in the data format indicating the static element; and/or receive the second map information based on the update frequency indicated by the first information element.

In this way, the information processing apparatus may obtain the information about the second map element in the first space area based on the received second map information. This helps the information processing apparatus obtain more comprehensive map information, and then perform a map update, planning and control, and the like, so that security of autonomous driving can be improved.

According to a second aspect, this application provides an information processing method. The method may be performed by an information processing apparatus, or may be implemented by a logical module or software that can implement all or some functions of an information processing apparatus. This is not limited in this application. For example, the information processing apparatus may include but is not limited to a terminal device, a roadside device, a server, or the like, and a component (for example, a chip or a chip system) configured in a terminal device, a roadside device, a server, or the like.

For example, the method includes: obtaining indication information, where the indication information includes a first information element, and the first information element indicates at least one of the following content: a dynamic/static attribute of a map element in a first space area, an update frequency of map information of the first space area, a data format of the map information of the first space area, and a data processing manner of the map information of the first space area; and receiving first map information, where the first map information indicates a first map element in the first space area. When the first information element indicates at least one of the dynamic/static attribute, the data format, and the data processing manner, the method further includes: obtaining information about the first map element from the first map information based on the indication information; and when the first information element indicates the update frequency, the receiving first map information includes: receiving the first map information based on the update frequency.

It should be understood that the information processing apparatus in the second aspect may correspond to, for example, an information processing apparatus B in the following embodiments. The first map information in the second aspect may correspond to, for example, map information A and/or map information C in the following embodiments, and the first map element in the second aspect may correspond to, for example, a map element A and/or a map element C in the following embodiments.

It should be further understood that the first map element in the first map information may be one or more map elements. A quantity of first map elements is not limited in this application. When the first information element indicates at least one of the dynamic/static attribute, the update frequency, the data format, and the data processing manner, map elements or map information of the first space area have/has a same attribute feature. For example, when the first information element indicates the dynamic/static attribute of the map element in the first space area, map elements in the first space area have a same dynamic/static attribute; when the first information element indicates the update frequency of the map information of the first space area, the map information of the first space area is processed or transmitted based on a same update frequency; when the first information element indicates the data format of the map information of the first space area, the map information of the first space area is generated or transmitted based on a same data format; and when the map information of the first space area is based on a same data processing manner, the map information of the first space area is processed based on the same data processing manner.

According to the foregoing technical content, the indication information indicates the map element or the map information of the first space area. The first space area is a space area obtained through division in a map based on an attribute feature of the map element or the map information. Map elements or map information in the area have/has a common attribute feature. The indication information indicates the map element or the map information of the first space area, so that a map information processing apparatus can receive or process the map information in a manner suitable for the common attribute feature. This relieves pressure caused by an excessively large amount of data on processing, transmission, or the like of the map. Specifically, the common attribute feature may be embodied as the dynamic/static attribute of the map element in the first space area, the update frequency of the map information of the first space area, the data format of the map information of the first space area, and the data processing manner of the map information of the first space area. For example, if all map elements in the first space area are dynamic elements, the map information processing apparatus may obtain information about the dynamic element from the first map information based on the at least one of the dynamic/static attribute, the data format, and the data processing manner indicated by the first information element; and/or decode, based on the data format indicated by the first information element, the first map information of the first space area in a data format indicating the dynamic element; and/or receive the first map information based on the update frequency indicated by the first information element. For another example, if all map elements in the first space area are static elements, the map information processing apparatus may obtain information about the dynamic element and information about the static element from the first map information based on the at least one of the dynamic/static attribute, the data format, and the data processing manner indicated by the first information element; and/or decode, based on the data format indicated by the first information element, the first map information of the first space area in the data format indicating the static element; and/or receive the map information of the first space area based on the update frequency indicated by the first information element. The technical solution reflects division of space areas. Some space areas are indicated in a targeted manner, so that a same processing manner is not used for all space areas in the map, and data redundancy caused by a processing manner used to consider all map elements is avoided. For example, a map with a static element has a small quantity of encoding fields, and a map with a dynamic element has a large quantity of encoding fields. In this case, a quantity of fields that need to be decoded is small when map data of a space area having a static attribute is decoded. For another example, an update frequency of map information of a static element is low, and an update frequency of map information of a dynamic element is high. In this case, there is no need to use a high sending frequency when map data of a space area having a static attribute is received.

In addition, the information processing apparatus may obtain the information about the first map element in the first space area based on the received first map information. This helps the information processing apparatus obtain more comprehensive map information, and then perform a map update, planning and control, and the like, so that security of autonomous driving can be improved.

With reference to the second aspect, in some possible implementations of the second aspect, the indication information further includes a second information element, and the second information element indicates a three-dimensional space range of the first space area.

For the second information element and the three-dimensional space area, refer to related descriptions in the first aspect. Details are not described herein again.

With reference to the first aspect or the second aspect, in some possible implementations, the obtaining indication information includes: generating the indication information or receiving the indication information.

For example, the information processing apparatus is a server. The server may generate the indication information. For another example, the information processing apparatus is a roadside device, a terminal device, or the like. The roadside device, the terminal device, or the like may receive the indication information from a server. This is not limited in this application.

With reference to the second aspect, in some possible implementations of the second aspect, the dynamic/static attribute is one of a dynamic attribute and a static attribute, or one of a dynamic attribute, a semi-dynamic attribute, a semi-static attribute, and a static attribute.

With reference to the second aspect, in some possible implementations of the second aspect, the data format is a data format indicating a static element or a data format indicating a dynamic element.

It should be understood that, for content of the three-dimensional space area, the dynamic/static attribute, and the data format, refer to related descriptions in the first aspect. Details are not described herein again.

With reference to the second aspect, in some possible implementations of the second aspect, second map information is generated based on the indication information and sensing information that is from a sensing device, where the second map information indicates a second map element in the first space area; and the second map information is sent.

The information processing apparatus may generate the second map information based on the indication information and the sensing information, and send the second map information. In this way, another device that receives the second map information obtains more comprehensive map information, and then performs a map update, planning and control, and the like, so that security of autonomous driving can be improved.

It should be understood that the second map information may correspond to, for example, map information B and/or the map information C in the following embodiments, and the second map element may correspond to, for example, a map element B and/or the map element C in the following embodiments.

It should be further understood that a process of generating the second map information is similar to a process of generating the first map information, and details are not described herein again.

According to a third aspect, this application provides an information processing method. The method may be performed by an information processing apparatus, or may be implemented by a logical module or software that can implement all or some functions of an information processing apparatus. This is not limited in this application. For example, the information processing apparatus may include but is not limited to a terminal device, a roadside device, a server, or the like, and a component (for example, a chip or a chip system) configured in a terminal device, a roadside device, a server, or the like.

For example, the method includes: generating indication information, where the indication information includes a first information element, and the first information element indicates at least one of the following content: a dynamic/static attribute of a map element in a first space area, an update frequency of map information of the first space area, a data format of the map information of the first space area, and a data processing manner of the map information of the first space area; and sending the indication information.

It should be understood that the information processing apparatus in the third aspect may correspond to, for example, an information processing apparatus C in the following embodiments.

It should be further understood that, when the first information element indicates at least one of the dynamic/static attribute, the update frequency, the data format, and the data processing manner, map elements or map information of the first space area have/has a same attribute feature. For example, when the first information element indicates the dynamic/static attribute of the map element in the first space area, map elements in the first space area have a same dynamic/static attribute; when the first information element indicates the update frequency of the map information of the first space area, the map information of the first space area is processed or transmitted based on a same update frequency; when the first information element indicates the data format of the map information of the first space area, the map information of the first space area is generated or transmitted based on a same data format; and when the map information of the first space area is based on a same data processing manner, the map information of the first space area is processed based on the same data processing manner.

According to the foregoing technical content, the indication information indicates the map element or the map information of the first space area. The first space area is a space area obtained through division in a map based on an attribute feature of the map element or the map information. Map elements or map information in the area have/has a common attribute feature. The indication information indicates the map element or the map information of the first space area, so that a map information processing apparatus can generate, transmit, or process the map information in a manner suitable for the common attribute feature. This relieves pressure caused by an excessively large amount of data on generation, transmission, processing, or the like of the map. Specifically, the common attribute feature may be embodied as the dynamic/static attribute of the map element in the first space area, the update frequency of the map information of the first space area, the data format of the map information of the first space area, and the data processing manner of the map information of the first space area. For example, if all map elements in the first space area are dynamic elements, the map information processing apparatus may generate, based on the dynamic/static attribute indicated by the first information element, map information that is of the first space area and that is encoded in a data format indicating the dynamic element, or decode the map information of the first space area in a data format indicating the dynamic element; and/or encode or transmit, based on the data format indicated by the first information element, the first map information of the first space area in a data format indicating the dynamic element; and/or process, based on the data processing manner indicated by the first information element, first map information in a data processing manner suitable for the dynamic element; and/or update or send the first map information based on the update frequency indicated by the first information element. For another example, if all map elements in the first space area are static elements, the map information processing apparatus may generate, based on the dynamic/static attribute indicated by the first information element, map information that is of the first space area and that is encoded in a data format indicating the static element, or decode the map information of the first space area in a data format indicating the dynamic element; and/or encode or transmit, based on the data format indicated by the first information element, the first map information of the first space area in a data format indicating the static element; and/or process, based on the data processing manner indicated by the first information element, the map information of the first space area in a data processing manner suitable for the static element; and/or update or send the map information of the first space area based on the update frequency indicated by the first information element. The technical solution reflects division of space areas. Some space areas are indicated in a targeted manner, so that a same processing manner is not used for all space areas in the map, and data redundancy caused by a processing manner used to consider all map elements is avoided. For example, a static element has a small quantity of encoding fields, and a dynamic element has a large quantity of encoding fields. In this case, when map data of a space area having a static attribute is generated, there is no need to add an encoding field that the dynamic element has but the static element does not have, and there are few fields that need to be decoded when the map data of the space area having the static attribute is decoded. For another example, an update frequency of map information of a static element is low, and an update frequency of map information of a dynamic element is high. In this case, there is no need to use a high sending frequency when map data of a space area having a static attribute is sent, and there is no need to use a high receiving frequency when the map data of the space area having the static attribute is received.

With reference to the third aspect, in some possible implementations of the third aspect, the indication information further includes a second information element, and the second information element indicates a three-dimensional space range of the first space area.

With reference to the third aspect, in some possible implementations of the third aspect, the dynamic/static attribute is one of a dynamic attribute and a static attribute, or one of a dynamic attribute, a semi-dynamic attribute, a semi-static attribute, and a static attribute.

With reference to the third aspect, in some possible implementations of the third aspect, the data format is a data format indicating a static element or a data format indicating a dynamic element.

It should be understood that, for content of the three-dimensional space area, the dynamic/static attribute, and the data format, refer to related descriptions in the first aspect. Details are not described herein again.

With reference to the third aspect, in some possible implementations of the third aspect, the method further includes: generating first map information based on the indication information and sensing information that is from a sensing device, where the first map information indicates a first map element in the first space area; and sending the first map information.

It should be understood that the first map information in the third aspect may correspond to, for example, map information C in the following embodiments, and the first map element in the third aspect may correspond to, for example, a map element C in the following embodiments.

The information processing apparatus may generate the first map information based on the indication information and the sensing information, and send the first map information. In this way, another device that receives the first map information obtains more comprehensive map information, and then performs a map update, planning and control, and the like, so that security of autonomous driving can be improved.

With reference to the third aspect, in some possible implementations of the third aspect, the method further includes: receiving second map information, where the second map information indicates a second map element in the first space area. When the first information element indicates at least one of the dynamic/static attribute, the data format, and the data processing manner, the method further includes: obtaining information about the second map element from the second map information based on the indication information; and when the first information element indicates the update frequency, the receiving second map information includes: receiving the second map information based on the update frequency.

It should be understood that the second map information in the third aspect may correspond to, for example, map information A and/or map information B in the following embodiments, and the second map element in the third aspect may correspond to, for example, a map element A and/or a map element B in the following embodiments.

A specific process in which the information processing apparatus receives the second map information is similar to a specific process in which the information processing apparatus receives the second map information in the second aspect, and details are not described herein again.

The information processing apparatus may also obtain the information about the second map element in the first space area based on the received second map information. This helps the information processing apparatus obtain more comprehensive map information, and then perform a map update, planning and control, and the like, so that security of autonomous driving can be improved.

With reference to the third aspect, in some possible implementations of the third aspect, the method further includes: updating the indication information based on the second map information.

The updating the indication information may include: updating the first information element and/or the second information element in the indication information.

For example, the updating the first information element may specifically include: updating one or more of the dynamic/static attribute, the update frequency, the data format, and the data processing manner of the map information of the first space area. The updating the second information element may specifically include: updating the space area, for example, deleting the first space area or adding a new space area.

The indication information is updated, so that the information processing apparatus may generate and report the map information of the first space area based on a newly divided space area or a newly defined dynamic/static attribute, update frequency, data format, data processing manner, or the like. In this way, the map information of the first space area can be appropriately generated and reported. This avoids unnecessary data processing and transmission, and helps improve map update efficiency.

With reference to the foregoing aspects, in some possible implementations, the indication information further indicates an identifier of the first space area, and the identifier of the first space area identifies the first space area in a map; and/or the indication information further indicates reference map information, and the reference map information indicates a version and/or a supplier of a map on which the indication information is based.

An identifier of a space area may identify the space area. To distinguish between different space areas, the different space areas may be identified. The identifier of the first space area may uniquely identify the first space area.

For example, the identifier of the first space area may include a first field and a second field. The first field is used to carry an area identifier. The area identifier is an area, for example, a tile, a road, or a lane, to which the first space area belongs, and an area identifier corresponding to the area identifier is, for example, a tile identifier, a road identifier, or a lane identifier. The second field is used to uniquely identify the first space area in the area.

The identifier of the first space area is indicated in the indication information, so that different devices (such as a server, a terminal device, and a roadside device) can align the three-dimensional space range of the first space area, then obtain first sensing information based on the first space area, and report the first map information. This can improve map update efficiency.

In addition, the identifier of the space area may further identify a priority of the space area, for example, different attention degrees required by different space areas are identified by using priorities. Further, the information processing apparatus obtains sensing information based on the priorities of different space areas, and generates map information. In this way, different attention degrees may be given to different areas, for example, a higher attention degree is given to an area with a dynamic attribute, which is more conducive to appropriate planning and control.

In addition, the indication information may further indicate reference map information, for example, indicate a version and/or a supplier of a reference map. The reference map information is indicated, so that different devices can align the three-dimensional space range of the first space area based on a same reference map, and the information processing apparatus can compare an extracted map element with the reference map information based on the same reference map, and determine whether collected information is different from the reference map information, to determine change information and generate the first map information. This reduces a data transmission amount.

With reference to the foregoing aspects, in some possible implementations, the map information of the first space area includes one or more of the following: an identifier of a map element, device information, time information, the reference map information, the identifier of the first space area, confidence information, and source information. The identifier of the map element identifies the map element; the device information indicates a device, for example, the foregoing information processing apparatus, for uploading the map information of the first space area; the time information indicates upload time of the map information of the first space area; the reference map information indicates the version and/or the supplier of the reference map; the confidence information indicates a reliability degree of the map information of the first space area; and the source information indicates the sensing device.

The device information and the source information are indicated, so that a receiving device of the map information of the first space area obtains, through identification, information uploaded by a same device, and may obtain, through identification, sensing information sensed by the same sensing device, and use the sensing information as an auxiliary information source. The time information is indicated, so that the receiving device of the map information of the first space area can identify latest information based on the upload time. The reference map information is indicated, so that the map information receiving device of the first space area can determine the map element of the first space area based on the reference map and the map information of the first space area. The identifier of the first space area is indicated, so that each device determines the first space area based on the identifier. The confidence information is indicated, so that the receiving device of the map information of the first space area performs appropriate planning and control based on the confidence information.

Optionally, the map information of the first space area further includes one or more of the following: motion information, color information, geometric information, and location information of the dynamic element. The color information indicates a color of the dynamic element, the location information indicate a location of the dynamic element, the geometric information indicates a shape and/or a size of the dynamic element, and the motion information indicates a motion direction and/or a motion speed of the dynamic element.

Because the dynamic element changes frequently, and may be in a motion state, at least one of the motion information, the location information, the geometric information, and the color information of the dynamic element may be indicated for the dynamic element, to accurately determine the dynamic element.

Optionally, the map information of the first space area further includes change information, where the change information indicates a change of the static element.

Because the static element may also change, for example, a traffic marking line changes from a solid line to a dashed line, or a color of a traffic marking line changes from white to yellow, and this type of change is not frequent, the static element may be indicated by the change information when the map information of the first space area indicates the static element.

According to a fourth aspect, this application provides an information processing apparatus, including modules or units configured to implement the method in any one of the first aspect to the third aspect and the possible implementations of the first aspect to the third aspect. It should be understood that each module or unit may implement a corresponding function by executing a computer program.

According to a fifth aspect, this application provides an information processing apparatus, including a processor and a memory. The memory is coupled to the processor, the memory is configured to store a computer program, and the processor executes the computer program, so that the apparatus implements the information processing method according to any one of the first aspect to the third aspect and the possible implementations of the first aspect to the third aspect.

Optionally, the apparatus may further include a communication interface. The communication interface is used by the apparatus to communicate with another device. For example, the communication interface may be a transceiver, a circuit, a bus, a module, or another type of communication interface.

It should be understood that the information processing apparatuses in the fourth aspect and the fifth aspect each may be a terminal device, a roadside device, a server, or a component (for example, a chip or a chip system) configured in a terminal device, a roadside device, a server, or the like. This is not limited in this application.

According to a sixth aspect, this application provides a vehicle. The vehicle may be configured to support implementation of a function in any one of the first aspect to the third aspect and the possible implementations of the first aspect to the third aspect, for example, receiving or processing data and/or information in the foregoing method.

For example, the vehicle includes the apparatus according to the fourth aspect or the fifth aspect.

According to a seventh aspect, this application provides a chip system. The chip system includes at least one processor, configured to support implementation of a function in any one of the first aspect to the third aspect and the possible implementations of the first aspect to the third aspect, for example, receiving or processing data and/or information in the foregoing method.

In a possible design, the chip system further includes a memory. The memory is configured to store program instructions and data, and the memory is located inside or outside the processor.

The chip system may include a chip, or may include a chip and another discrete component.

According to an eighth aspect, this application provides a communication system, including a first information processing apparatus and a second information processing apparatus. The first information processing apparatus is configured to perform the method according to any one of the first aspect and the possible implementations of the first aspect, and the second information processing apparatus is configured to perform the method according to any one of the third aspect and the possible implementations of the third aspect.

Optionally, the communication system further includes a third information processing apparatus. The third information processing apparatus is configured to perform the method according to any one of the third aspect and the possible implementations of the third aspect.

According to a ninth aspect, this application provides a computer-readable storage medium, including a computer program. When the computer program is run on a computer, the computer is enabled to implement the method according to any one of the first aspect to the third aspect and the possible implementations of the first aspect to the third aspect.

According to a tenth aspect, this application provides a computer program product. The computer program product includes a computer program (which may also be referred to as code or instructions), and when the computer program is run, the computer is enabled to perform the method according to any one of the first aspect to the third aspect and the possible implementations of the first aspect to the third aspect.

### BRIEF DESCRIPTION OF DRAWINGS

FIG. 1 is a diagram of an architecture of a system according to an embodiment of this application;
FIG. 2 is a schematic flowchart of an information processing method according to an embodiment of this application;
FIG. 3 is a diagram of a plurality of space areas according to an embodiment of this application;
FIG. 4 is a diagram of indication information according to an embodiment of this application;
FIG. 5 is a schematic flowchart of an information processing method according to an embodiment of this application;
FIG. 6 is a schematic flowchart of another information processing method according to an embodiment of this application;
FIG. 7A and FIG. 7B are a schematic flowchart of still another information processing method according to an embodiment of this application;
FIG. 8 is a diagram of a method applied to a specific scenario according to an embodiment of this application; and
FIG. 9 to FIG. 12 each are a block diagram of an information processing apparatus according to an embodiment of this application.

### DESCRIPTION OF EMBODIMENTS

The following describes technical solutions of this application with reference to accompanying drawings.

For ease of understanding embodiments of this application, the following descriptions are provided first.

First, "sending" in embodiments of this application may be performed between devices, for example, may be performed between different vehicles, may be performed between different roadside devices, or may be performed between different servers. Alternatively, "sending" in embodiments of this application may be performed between a roadside device and a server, may be performed between a roadside device and a vehicle, or may be performed between a server and a vehicle. For another example, "sending" in embodiments of this application may be performed in a device, for example, may be performed between components, modules, chips, software modules, or hardware modules in the device through a bus, a cable, or an interface. For example, coordinate conversion information may be sent in a same roadside device.

"Receiving" in embodiments of this application may be performed between devices, for example, may be performed between different vehicles, may be performed between different roadside devices, or may be performed between different servers. Alternatively, "receiving" in embodiments of this application may be performed between a roadside device and a server, may be performed between a roadside device and a vehicle, or may be performed between a server and a vehicle device. For another example, "receiving" in embodiments of this application may be performed in a device, for example, may be performed between components, modules, chips, software modules, or hardware modules in the device through a bus, a cable, or an interface. For example, coordinate conversion information may be received in a same server, or may be received in a same vehicle.

Second, prefixes "first", "second", and the like in embodiments of this application are merely intended to distinguish between different objects, and impose no limitation on locations, sequences, priorities, quantities, content, or the like of the described objects. For example, if a described object is a "field", ordinal numbers before "fields" in a "first field" and a "second field" do not limit locations or a sequence of the "fields", and "first" and "second" do not limit whether the "fields" modified by "first" and "second" are in a same message, and do not limit a sequence of the "first field" and the "second field". For another example, if a described object is a "level", ordinal numbers before "levels" in a "first level" and a "second level" do not limit priorities of the "levels". For another example, a quantity of described objects is not limited by a prefix, and may be one or more. A "first device" is used as an example, and there may be one or more "devices". In addition, objects modified by different prefixes may be the same or different. For example, if a described object is a "device", a "first device" and a "second device" may be a same device, devices of a same type, or devices of different types. For another example, if a described object is "information", "first information" and "second information" may be information with same content or information with different content. In a word, in embodiments of this application, use of a prefix used to distinguish between described objects does not constitute a limitation on the described objects. For descriptions of the described objects, refer to context descriptions in claims or embodiments, and use of such a prefix shall not constitute an unnecessary limitation.

Third, in embodiments of this application, "at least one" means one or more, and "a plurality of means two or more. "And/or" describes an association relationship between associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

Fourth, in embodiments of this application, both "when" and "if" mean that an apparatus performs corresponding processing in an objective situation, are not intended to limit time, do not require the apparatus to necessarily have a determining action during implementation, and do not mean another limitation.

Fifth, "simultaneously" in embodiments of this application may be understood as being at a same time point, may be understood as being in a time period, or may be understood as being in a same period, and may be specifically understood with reference to the context.

The technical solutions provided in this application may be applied to an intelligent transportation system, which is also referred to as an intelligent transportation system (intelligent transportation system). The intelligent transportation system effectively applies an information technology, a data communication technology, a sensor technology, and artificial intelligence to transportation and service control. This can effectively improve security and efficiency of transportation.

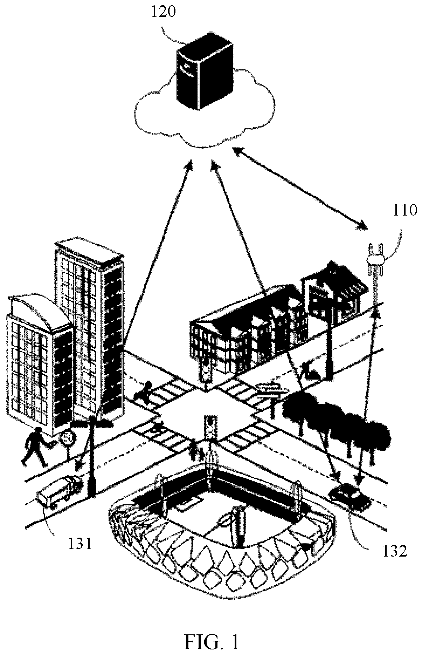

FIG. 1 is a diagram of an architecture of a system applicable to an embodiment of this application. The system 100 shown in FIG. 1 includes at least one of a roadside device, a server, and a terminal device. For example, FIG. 1 shows a roadside device 110, a server 120, and terminal devices 131 and 132.

The roadside device 110 includes an apparatus like a roadside unit (roadside unit, RSU), multi-access edge computing (multi-access edge computing, MEC), or a sensor. For example, the roadside device 110 may be the RSU, the MEC, or the sensor, may be a system including the RSU and the MEC, may be a system including the RSU and the sensor, or may be a system including the RSU, the MEC, and the sensor.

The server 120 may be a device having a computing function, for example, an application server or a map server. For example, the server 120 may be a server deployed in a cloud environment, namely, a cloud server; or may be a server deployed in an edge environment, namely, an edge computing server. The server 120 may be an integrated device, or may be a plurality of distributed devices. This is not specifically limited in embodiments of this application.

The terminal devices 131 and 132 each may be, for example, a vehicle, an on-board unit (on-board unit, OBU), an intelligent wearable device (for example, a sports band or a watch), a portable mobile device (for example, a mobile phone or a tablet), a component in a portable mobile device, or a chip in the foregoing plurality of devices. This is not specifically limited in embodiments of this application.

Although FIG. 1 shows only one roadside device 110, one server 120, and two terminal devices 131 and 132, it should be understood that quantities of roadside devices, servers, and terminal devices are not limited in this application. The system 100 may further include other quantities of roadside devices, servers, and terminal devices, or may include one or more of the roadside devices, servers, and terminal devices. This is not limited in this application.

It should be understood that any device may be used as a sending device or a receiving device.

For example, in a specific implementation, when an electronic map is generated by the server, the server may obtain risk event information based on a base map and an artificial intelligence model. The artificial intelligence model is obtained through training based on historical accident data. The historical accident data includes an occurrence time period of a historical accident, an accident area, a risk level, environment information of the accident area in the occurrence time period, road status information of the accident area, and the like. In some possible embodiments, when the server may detect, based on a data source device (for example, a road surface monitoring apparatus, a roadside device, or a terminal device), that an element that affects a risk event changes, the server may further update the risk event information based on a changed element. It should be noted that the base map may be a high-definition map, a standard-definition map, or another type of map. This is not specifically limited in embodiments of this application. In some possible embodiments, the data source device may be, for example, a device for providing traffic road condition data by a traffic management department. In this case, the server may serve as a publisher of the electronic map, and the terminal device or the roadside device may serve as a receiver and a user of the electronic map.

Because the terminal device and the roadside device each also have an information obtaining capability and a computing capability, in addition to serving as the receiver and the user of the electronic map, the terminal device or the roadside device may alternatively serve as a producer of the electronic map to locally generate the risk event information for use by the terminal device or the roadside device or for sending the risk event information to another device.

For example, the terminal device serves as the producer of the electronic map. The terminal device may be an apparatus like a vehicle or an OBU. In this case, the terminal device stores the base map. The terminal device may obtain, from the base map based on current location information of the terminal device and/or planned track information of the terminal device, map data related to the risk event at a location of the terminal device or within a specific geographical area range, for example, environment prediction information or road status information, and generate, based on the artificial intelligence model, an electronic map including risk event information within the specific geographical area range, for use by the terminal device or for use by another device.

The electronic map may be released through a cellular communication network or vehicle-to-everything (vehicle-to-everything, V2X). For example, when a map server on a cloud releases the electronic map to a portable terminal device held by a pedestrian, the electronic map may be released through a cellular communication network including a base station, or the electronic map may be forwarded by the roadside device to the portable terminal through V2X communication. Because the risk event is closely related to a dynamic element in an ambient environment, the risk event information is updated accordingly when a status of the related dynamic element changes.

It should be noted that, in the foregoing systems, communication between the server and the terminal device, between the terminal device and the roadside device, and between the server and the roadside device all may be performed by using a cellular communication technology, for example, may be performed through 2G cellular communication such as a global system for mobile communications (global system for mobile communications, GSM) or a general packet radio service (general packet radio service, GPRS); may be performed through 3G cellular communication such as wideband code division multiple access (wideband code division multiple access, WCDMA), time division-synchronous code division multiple access (time division-synchronous code division multiple access, TS-SCDMA), or code division multiple access (code division multiple access, CDMA); may be performed through 4G cellular communication such as long term evolution (long term evolution, LTE); may be performed through 5G cellular communication; or may be performed by using another evolved cellular communication technology. A wireless communication system may alternatively communicate with a wireless local area network (wireless local area network, WLAN) by using a non-cellular communication technology, for example, Wi-Fi. In some embodiments, communication between the foregoing devices may alternatively be performed directly through an infrared link, Bluetooth (Bluetooth), or zigbee (zigbee). In some embodiments, communication between the foregoing devices may alternatively be performed by using another wireless protocol, for example, various vehicle communication systems. For example, the system may include one or more dedicated short range communications (dedicated short range communications, DSRC) devices, and these devices may include public and/or private data communication between vehicles and/or roadside stations. This is not specifically limited in this application.

It should be noted that FIG. 1 is merely an example diagram of an architecture, but a quantity of network elements included in the system shown in FIG. 1 is not limited. Although not shown in FIG. 1, in addition to functional entities shown in FIG. 1, another functional entity may be included in FIG. 1. In addition, methods provided in embodiments of this application may be applied to the system shown in FIG. 1. Certainly, the methods provided in embodiments of this application may alternatively be applied to another communication system. This is not limited in embodiments of this application.

Embodiments of this application provide an information processing method. Indication information indicates one or more of a dynamic/static attribute, an update frequency, a data format, and a data processing manner of a specific space area, so that a sensing device can appropriately perform data processing based on the indication information, for example, perform differentiated processing on space areas with different dynamic/static attributes, and process and report map information of different space areas based on different update frequencies. In this way, differentiated processing and reporting can be performed on the map information of the different space areas, and there is no need to process and report all sensing information each time the map information is reported. This can reduce a data processing amount, and reduce a requirement on computing power of a device. In addition, because there is no need to process and report all sensing information, a reported data amount can be reduced, and a requirement on a transmission bandwidth can be reduced.

The following describes the information processing method according to embodiments of this application in detail with reference to the accompanying drawings.

For ease of understanding the following embodiments, terms in the following are first described.
1. Map: The map is a carrier of geographic information. The map includes a plurality of layers (layers). The layer is a map data set with a specific organization structure. Data in the layer is organized in a specific data structure and can be used to describe map elements from a plurality of sources. For example, a road, a lane line, a building, a pedestrian, a vehicle, a traffic sign, a roadside device, and the like in FIG. 1 are all map elements.

The map elements may be classified into different dynamic/static attributes based on a time-varying characteristic of the map elements.

In a possible design, the map elements may be classified into two types, namely, a static element and a dynamic element. The static element is a map element that is fixed, has a small change, or has a long update period, for example, a road, a building, a lane line, a lane direction, or a traffic infrastructure layout. The dynamic element is a map element that has a strong time-varying characteristic, and may also be referred to as an event, for example, a traffic accident, a weather change, road surface freezing, road construction, or traffic congestion.

In the map, the static element and the dynamic element are recorded at different layers. For example, information about the static element is carried at a static layer in the map, and information about the dynamic element is carried at a dynamic layer in the map. In other words, data at the static layer in the map may be referred to as an element or a static element, and data at the dynamic layer in the map may be referred to as an event or a dynamic element.

The map may include one or more static layers, and may further include one or more dynamic layers. For example, a specific map includes one static layer and a plurality of dynamic layers. Geographical distribution of a building, a road, a tree, a traffic light, and a road sign is recorded at the static layer. A real-time speed limit status, a traffic construction status, and a pedestrian and vehicle flow status of a lane are recorded at a dynamic layer 1. A weather condition, for example, sunny, rainy, snowy, windy, a temperature, or humidity is recorded at a dynamic layer 2.

In another possible design, the map elements may alternatively be classified into four types, namely, a static element, a semi-static element, a semi-dynamic element, and a dynamic element. The static element is a map element that is fixed, has a small change, or has a long update period, for example, includes a road and a building. These map elements generally do not change, and have a long update period, for example, may be updated by month or day. Compared with the static element, the semi-static element is an element that has a relative change but has a low change frequency, for example, includes road construction and weather information. An update period of the map element of this type may be measured in hours or minutes. The semi-dynamic element may include a traffic accident, traffic congestion, or the like happened on a road at any time, and an update period of the map element of this type may be less than one minute. The dynamic element may include information updated in real time, for example, may include a vehicle or a pedestrian, and an update period of the map element of this type may be measured in seconds.

Based on such division, the static element, the semi-static element, the semi-dynamic element, and the dynamic element are recorded at different layers. For example, information about the static element is carried at a static layer in the map, information about the semi-static element is carried at a semi-static layer in the map, information about the semi-dynamic element is carried at a semi-dynamic layer in the map, and information about the dynamic element is carried at a dynamic layer in the map.

The map may include one or more static layers, one or more semi-static layers, one or more semi-dynamic layers, and one or more dynamic layers. For information carried at the layers, refer to the foregoing examples of the static layer and the dynamic layer. Details are not described herein again.

It may be understood that, regardless of how the map elements are classified, the map elements are actually classified based on the time-varying characteristic of the map elements, and only quantities of classification types are different.

It should be noted that, for a specific described object in the map, the described object may have both a time-varying map element and a non-time-varying map element. The non-time-varying map element is a map element that is fixed, has a small change, or has a long update period. That is, the described object is related to an element in the map and an event in the map. For example, for a specific lane, a geographical location of the lane is an element in the map, a traffic flow of the lane is an event in the map, a speed limit of the lane is an event in the map, and a permitted-to-pass time period of the lane is an event in the map. For a specific traffic light, a location of the traffic light at an intersection is an element in a map, and a light-on change of the traffic light is an event in the map.

2. Road network structure data: The road network structure data in a map may be classified into tile-level data, road-level data, and lane-level data. Each tile in the map has a unique tile identifier (identifier, ID), each tile includes a plurality of roads, each road has a unique road ID, each road includes a plurality of lanes, and each lane has a unique lane ID. The tile may be understood as follows: A map within a specific range is divided into a rectangular raster image of several rows and columns based on a specific size and format and different map resolutions, and the rectangular raster image obtained through division is referred to as a tile (tile).

The following describes the information processing method according to embodiments of this application with reference to the accompanying drawings. The information processing method shown below may be performed by an information processing apparatus, or may be implemented by a logical module or software that can implement all or some functions of an information processing apparatus. This is not limited in this application. For example, the information processing apparatus may include but is not limited to a terminal device, a roadside device, a server, or the like, and a component (for example, a chip or a chip system) configured in a terminal device, a roadside device, a server, or the like.

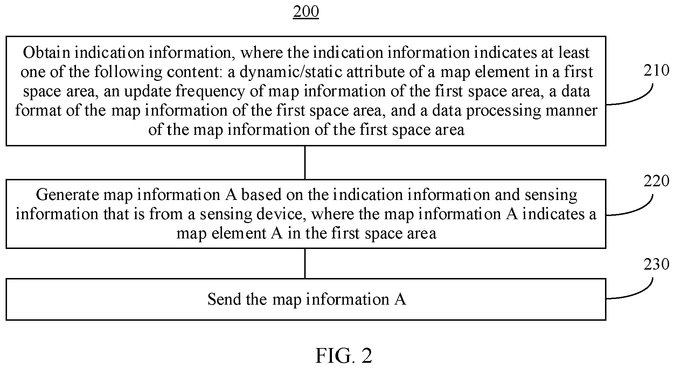

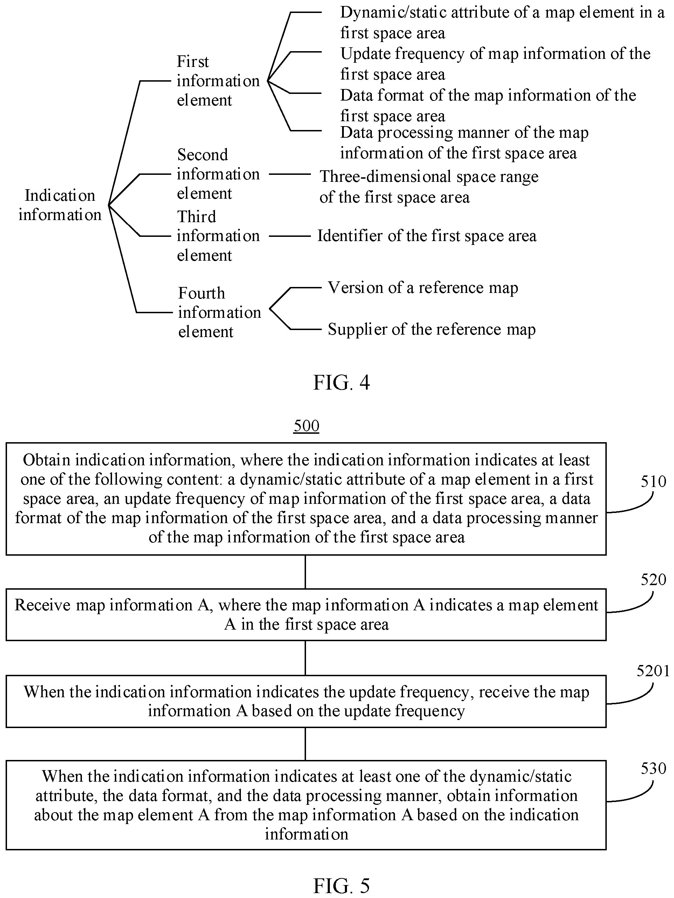

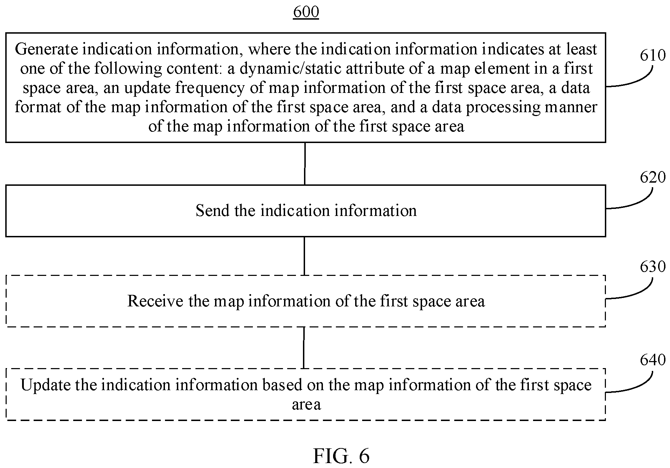

In addition, for ease of differentiation and description, an information processing apparatus configured to perform a method 200 shown in FIG. 2 is denoted as an information processing apparatus A, and map information generated by the information processing apparatus A is denoted as map information A, where the map information A may indicate a map element A in a first space area. An information processing apparatus configured to perform a method 500 shown in FIG. 5 is denoted as an information processing apparatus B, and map information generated by the information processing apparatus B is denoted as map information B, where the map information B may indicate a map element B in the first space area. An information processing apparatus configured to perform a method 600 shown in FIG. 6 is denoted as an information processing apparatus C, and map information generated by the information processing apparatus C is denoted as map information C, where the map information C may indicate a map element C in the first space area.

It should be understood that the map information A, the map information B, and the map information C are all map information of the first space area, each may indicate a map element in the first space area, and may be generated based on same indication information. Map elements indicated by the map information A, the map information B, and the map information C may be the same or different. The map element A, the map element B, and the map element C each may include one or more map elements, and the map element A, the map element B, and the map element C may be the same or different. In this specification, names are used only for distinguishing between different processing apparatuses, and shall not constitute any limitation on map information and map elements.

FIG. 2 is a schematic flowchart of an information processing method 200 according to an embodiment of this application. As shown in FIG. 2, the information processing method 200 may include step 210 to step 230. The following describes the steps in the method 200 in detail.

In step 210, an information processing apparatus A obtains indication information, where the indication information indicates at least one of the following content: a dynamic/static attribute of a map element in a first space area, an update frequency of map information of the first space area, a data format of the map information of the first space area, and a data processing manner of the map information of the first space area.

As described above, a plurality of different space areas may be obtained by dividing a space area in a map. In this specification, the method provided in this application is described by using the first space area as an example. The first space area may be any space area in the map. Correspondingly, sensing information of the first space area may be denoted as first sensing information. The map information of the first space area may be denoted as first map information.

The map may be a map pre-stored in the information processing apparatus A, for example, a map locally pre-stored in a server, or a map obtained by a terminal device, a roadside device, or the like from a server. It should be noted that, because the server may frequently update the map, the map held by a device like the terminal device or the roadside device that serves as the information processing apparatus A is not necessarily a map of a latest version held by the server. In other words, the map held by the information processing apparatus A and the map in the server may be maps of different versions or maps of a same version.

In embodiments of this application, for ease of differentiation and description, the map of the latest version held by the server is denoted as a reference map. The server may divide a space area based on the reference map, and generate the indication information for each space area; and may further update the reference map based on the received map information. The first space area may be obtained by dividing the space area in the reference map by the server, and delivered to the terminal device, the roadside device, or the like that serves as the information processing apparatus A, or may be obtained, by the terminal device, the roadside device, the server, or the like that serves as the information processing apparatus A, by dividing a space area in the map held by the terminal device, the roadside device, the server, or the like. This is not limited in this application.

For example, if the information processing apparatus A includes the terminal device and/or the roadside device, after dividing the space area in the reference map, the server may generate the indication information for each space area, and deliver the indication information to the terminal device and the roadside device. In other words, that the information processing apparatus A obtains the indication information in step 210 may include: The information processing apparatus A receives the indication information.

For another example, if the information processing apparatus A includes the server, the terminal device, or the roadside device, the information processing apparatus A may divide the space area in the map held by the information processing apparatus A, and generate the indication information for each space area. In other words, that the information processing apparatus A obtains the indication information in step 210 may include: The information processing apparatus A determines the indication information.

Division of each space area may be determined based on a space distribution feature of each map element in the map. That is, when the first space area is obtained through division, the dynamic/static attribute of the first space area may be determined.

If the first space area is determined by the server, the indication information is from the server. The indication information indicates one or more of the dynamic/static attribute of the map element in the first space area, the update frequency of the first space area, the data format of the first space area, and the data processing manner of the first space area, and may further indicate a three-dimensional space range of the first space area.

In a possible design, the indication information includes a first information element and a second information element. The first information element indicates one or more of the dynamic/static attribute of the map element in the first space area, the update frequency of the first space area, the data format of the first space area, and the data processing manner of the first space area. The second information element indicates the three-dimensional space range of the first space area.

After receiving the indication information, the information processing apparatus A may determine the first space area based on the second information element, and then process the sensing information (namely, the first sensing information) in the first space area based on the first information element.

Content indicated by the indication information is separately described in detail below.

### (1) Dynamic/static attribute of the map element in the first space area

Based on the foregoing classification of the map elements and space distribution features of different map elements, in embodiments of this application, a space area is divided, so that map elements in a same area correspond to a same dynamic/static attribute. For example, the dynamic/static attribute may include a static attribute and a dynamic attribute, or may include a static attribute, a semi-static attribute, a semi-dynamic attribute, and a dynamic attribute.

The map elements in the first space area may have a same dynamic/static attribute, for example, one of the static attribute and the dynamic attribute, or one of the static attribute, the semi-static attribute, the semi-dynamic attribute, and the dynamic attribute. This is not limited in this application.

In a possible design, the space area may be divided based on a space distribution feature of a dynamic/static attribute of each map element in the map, and a space area in which map elements with a same dynamic/static attribute are located is defined as a same space area. Definitely, a manner of dividing the space area is not limited thereto. Because precision of dividing the space area is high in the foregoing design, a large quantity of space areas are obtained through division. In another possible design, a space area in which a proportion of map elements with a same dynamic/static attribute is greater than a specific threshold may be defined as a space area based on a space distribution feature of a dynamic/static attribute of each map element in the map. In this case, a space area obtained through division may be a continuous space area. After division of space areas is completed, map elements in the same space area may be defined as having a same dynamic/static attribute, so that the map information is generated and sent in a same processing manner subsequently. Compared with the previous design, in this design, precision of dividing the space area is not as precise as that in the previous design, but calculation complexity can be greatly reduced.

It should be understood that division of space areas in the map is not limited to the foregoing examples. For example, when the space area is divided, factors such as a size of the space area and a potential security risk brought by map elements in a same space area may be considered. This application includes but is not limited thereto.

To distinguish between dynamic/static attributes of map elements in different space areas, the space areas may be further associated with the dynamic/static attributes. For example, the dynamic/static attribute of the map element in the first space area may be defined as a dynamic/static attribute of the first space area. The dynamic/static attribute of the first space area may be, for example, one of the static attribute and the dynamic attribute, or one of the static attribute, the semi-static attribute, the semi-dynamic attribute, and the dynamic attribute. In this case, the indication information indicates the dynamic/static attribute of the map element in the first space area, which may be replaced with that the indication information indicates the dynamic/static attribute of the first space area.

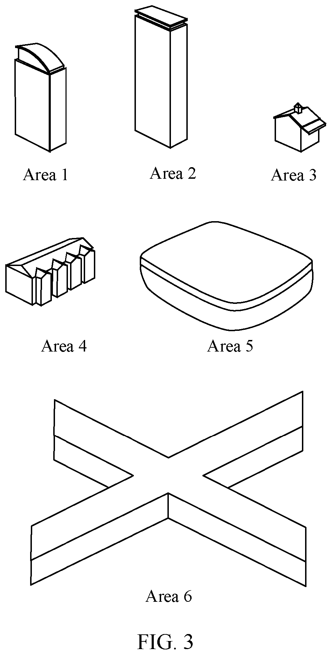

FIG. 3 shows some space areas obtained by dividing the map in FIG. 1. It should be understood that the space areas shown in FIG. 3 are merely examples, and not all space areas in FIG. 1 are traversed. It can be learned that areas 1, 2, 3, 4, and 5 are buildings and are static elements. Dynamic/static attributes of these areas may be defined as static attributes. An area 6 is a space area on the road and in vertical space above the road. Because there is a traffic flow like a pedestrian flow or a vehicle flow within a specific height range (for example, within a range of 2 meters) above the road, a dynamic/static attribute of the area may be defined as the dynamic attribute.

It should be understood that the space areas shown in FIG. 3 and the dynamic/static attributes corresponding to the space areas are merely examples for ease of understanding, and shall not constitute any limitation on this application. In addition to the space areas shown in FIG. 3, more space areas may be obtained by dividing the space shown in FIG. 1. For example, there may also be pedestrians in areas within a specific height range around the area 1 to the area 5. Therefore, dynamic/static attributes of these areas may also be defined as the dynamic attributes. In an actual scenario, a traffic environment is far more complex than that shown in FIG. 1. Therefore, the space area may be further defined as having more dynamic/static attributes, for example, a static attribute, a semi-static attribute, a semi-dynamic attribute, and a dynamic attribute, based on a quantity of predefined categories. Drawings are not provided one by one herein again for description.

Because the map information is used to reflect a status of the map element in the space area, if a dynamic/static attribute of the first space area is the dynamic attribute, all map elements in the first space area may be processed in a data processing manner of a dynamic element, and/or the map information is generated in a data format of the dynamic element, and/or the map information is updated or sent based on an update frequency of the dynamic element. If a dynamic/static attribute of the first space area is the static attribute, all map elements in the first space area may be processed in a data processing manner of a static element, and/or the corresponding map information is generated in a map data format of the static element, and/or the map information is updated or sent based on an update frequency of the static element. The rest may be deduced by analogy, and details are not described again.

### (2) Update frequency

It should be understood that the update frequency may be specifically a frequency at which the information processing apparatus A updates the map information, or a frequency at which the map information is sent. For the information processing apparatus A, each update of the map information depends on sensing information collected in a time period (namely, an update period) between a previous update and a current update. In this case, a higher update frequency indicates a shorter update period. If the dynamic/static attribute of the map element in the first space area is the dynamic attribute, a high update frequency may be used; or if the dynamic/static attribute of the map element in the first space area is the static element, a low update frequency may be used.

Map information of different space areas may correspond to different update frequencies. When the indication information indicates the update frequency, the indication information may directly indicate an update frequency of the first space area.

### (3) Data format

The data format may be used to define a format of the map information. For example, the data format may be used to define content to be carried in the map information, and a field corresponding to each piece of content; and may be further used to define an encoding manner used by each piece of content to be encoded in the map information. It may be understood that, after the map information is generated in a specific data format, the map information may be transmitted in a form of the data format.

For example, the data format may be classified into a data format indicating a static element and a data format indicating a dynamic element. Alternatively, the data format may be classified into a data format indicating a static element, a data format indicating a semi-static element, a data format indicating a semi-dynamic element, and a data format indicating a dynamic element.

In a possible design, the data format indicating the dynamic element includes a field used to carry motion information, and the data format indicating the static element does not include a field used to carry the motion information. The motion information includes a motion direction and/or a motion speed.

This is because different dynamic/static map elements may have different levels of security risks. For example, if the dynamic element changes at a high frequency, there is a high security risk. Therefore, the motion information may be used for indication, so that the map is updated in a timely manner based on the sensing information obtained in real time. If the static element changes at a low frequency, there is no need to frequently update the map based on the sensing information obtained in real time.

In addition to whether the field indicating the motion information is included, there may be another difference between the data format indicating the dynamic element and the data format indicating the dynamic element. For example, map data indicating the static element and the semi-static element may be used to describe a change of the static element and a change of the semi-static element by using a difference. In this way, a data transmission amount can be reduced, and bandwidth can be saved. For another example, an encoding manner of map data indicating the dynamic element may also be different from that of map data indicating the static element. For brevity, details are not described herein again.

Certainly, the data format may alternatively be divided into more possible formats based on different definitions of dynamic/static attributes of map elements in different space areas. For example, in comparison with the dynamic attribute, the semi-dynamic attribute, the semi-static attribute, and the static attribute, the data format may alternatively be divided into more different formats. This is not limited in this application.

### (4) Data processing manner

The data processing manner may be specifically a manner in which the information processing apparatus A processes the sensing information from a sensing device. In an actual scenario, the sensing information usually comes from a plurality of different sensing devices such as a lidar, a millimeter-wave radar, and a camera. The sensing information collected by different sensing devices may be collected from different angles and different locations, and therefore the collected sensing information may be data at different locations and data in different reference systems. In addition, data types of the sensing information from different sensing devices may also be different, for example, may be point cloud data or image data. Therefore, data processing may specifically include but is not limited to extracting a map element from the sensing information, fusing map elements, and the like. Fusion includes: fusing data collected at different locations, data in different coordinate systems, and data of different types, and presenting fused data as one type of data in a same coordinate system.

There are also a plurality of data processing manners. Some data processing manners are complex, and calculation takes long time; and some data processing manners are simple, and calculation takes short time. Because map elements in different space areas may correspond to different dynamic/static attributes, different data processing manners may be used for processing the map elements in the different space areas. For example, for the dynamic element, a data processing manner that takes short time may be used, to obtain real-time data; and for the static element, a data processing manner that takes long time may be used, or even sensing information at a plurality of time points may be fused.

### (5) Three-dimensional space range

The three-dimensional space range is specifically a three-dimensional space range of a space area. In embodiments of this application, the three-dimensional space range may be specifically expressed by using three-dimensional space coordinates of the space area. For example, three-dimensional coordinates in a universal coordinate system may be used for expression, where the universal coordinate system may include but is not limited to a geographic coordinate system (geographic coordinate system), a geodetic coordinate system, or the like; or three-dimensional coordinates in a relative coordinate system may be used for expression, for example, a location of the first space area is expressed by using three-dimensional coordinates relative to a location point in the reference map. This is not limited in this application.

It should be noted that the information processing apparatus A does not necessarily hold the reference map. When the information processing apparatus A holds the reference map, the second information element in the indication information may indicate the three-dimensional space range of the first space area by indicating the three-dimensional coordinates of the first space area relative to the location point in the reference map; or when the information processing apparatus A does not hold the reference map, the second information element in the indication information may indicate the three-dimensional space range of the first space area by using the three-dimensional coordinates in the universal coordinate system. This is not limited in this application.

As described above, the indication information may indicate one or more of the dynamic/static attribute of the map element in the first space area, the update frequency of the map information of the first space area, the data format of the map information of the first space area, and the data processing manner of the map information of the first space area. In other words, the indication information may indicate the dynamic/static attribute of the map element in the first space area, the update frequency, the data format of the map information of the first space area, or the data processing manner of the map information of the first space area; or may indicate any plurality of the four items.

In a possible design, for the first space area, each dynamic/static attribute may correspond to one or more of the following: an update frequency of first map information, a data format of the first map information, and a data processing manner of the first map information. To be specific, after determining the dynamic/static attribute of the map element in the first space area, the information processing apparatus A may process and report the sensing information of the first space area based on the update frequency corresponding to the dynamic/static attribute, process the sensing information of the first space area based on the data processing manner corresponding to the dynamic/static attribute, or generate the first map information based on the data format corresponding to the dynamic/static attribute.

A correspondence between an update frequency and a dynamic/static attribute is used as an example. Update periods of different map elements are different. Therefore, based on the foregoing division of the dynamic/static attribute, different update frequencies may be defined for map elements with different dynamic/static attributes, or different update frequencies may be defined for space areas with different dynamic/static attributes. That is, update frequencies may also one-to-one correspond to dynamic/static attributes. For example, for a space area in which a map element with the dynamic attribute is located, an update frequency of map information is the highest, and for a space area in which a map element with the static attribute is located, an update frequency of map information is the lowest. In other words, the update frequency of the map information of the space area with the dynamic attribute is the highest, and the update frequency of the map information of the space area with the static attribute is the highest.

If the dynamic/static attribute includes the static attribute and the dynamic attribute, update frequencies corresponding to the two attributes are the dynamic attribute and the static attribute in descending order; or if the dynamic/static attribute includes the static attribute, the semi-static attribute, the semi-dynamic attribute, and the dynamic attribute, update frequencies corresponding to the four attributes are the dynamic attribute, the semi-dynamic attribute, the semi-static attribute, and the static attribute in descending order.

Certainly, update frequencies may alternatively not one-to-one correspond to dynamic/static attributes. A same update frequency may alternatively be defined for different dynamic/static attributes. For example, the static attribute and the semi-static attribute correspond to one update frequency, and the dynamic attribute and the semi-dynamic attribute correspond to another update frequency.

It may be understood that, when the update frequencies may alternatively one-to-one correspond to the dynamic/static attributes, either the dynamic/static attribute or the update frequency may be indicated. That is, the update frequency may be implicitly indicated by the dynamic/static attribute, or the dynamic/static attribute may be implicitly indicated by the update frequency. In this way, signaling overheads of the indication information can be reduced.

Certainly, even if the update frequencies do not one-to-one correspond to the dynamic/static attributes, if update frequencies corresponding to different dynamic/static attributes are predefined, the update frequencies may be implicitly indicated by the dynamic/static attributes.

A correspondence between a dynamic/static attribute and each of a data format and a data processing manner is similar to the correspondence between an update frequency and a dynamic/static attribute. For brevity, examples are not listed one by one herein.

It may be understood that, when there is a one-to-one correspondence between a plurality of dynamic/static attributes, a plurality of update frequencies, a plurality of data formats, and a plurality of data processing manners, one of the four items may be selected for indication, that is, any one of the four items implicitly indicates any one of the other three items. This reduces signaling overheads of the indication information.

In addition to the dynamic/static attribute, the update frequency, the data format, the data processing manner, and the three-dimensional space range, the indication information may further indicate an identifier of the first space area and/or reference map information.

It may be understood that the map may include more space areas in addition to the first space area. To distinguish between different space areas, the different space areas may be identified. The identifier of the first space area may uniquely identify the first space area in the map. It should be understood that the map may be the reference map, or may be the map held by the information processing apparatus A. This is not limited in this application.

In a possible design, the identifier of the first space area includes a first field and a second field. The first field is used to carry an area identifier. The area identifier is a tile, a road, a lane, or the like to which the first space area belongs, and an identifier corresponding to the area identifier is, for example, a tile identifier, a road identifier, or a lane identifier. The second field is used to uniquely identify the first space area within a tile range, a road range, a lane range, or another range.

In addition, the identifier of the space area may further identify a priority of the space area, for example, different attention degrees required by different space areas are identified by using priorities. Further, the information processing apparatus A obtains sensing information based on the priorities of the different space areas, and generates map information.

The reference map information may indicate a version and/or a supplier of the reference map. The reference map information is indicated, so that different devices can align the three-dimensional space range of the first space area based on a same reference map, and the information processing apparatus A can compare an extracted map element with the reference map information based on the same reference map, to generate the first map information. For example, the information processing apparatus A may determine whether collected information is different from the reference map information, to determine change information and generate the first map information. This reduces a data transmission amount.

It should be understood that the information processing apparatus A does not necessarily hold the reference map. If the information processing apparatus A does not hold the reference map, the information processing apparatus A may alternatively generate the first map information based on prior map data.

FIG. 4 shows an example of the indication information. The indication information shown in FIG. 4 includes a first information element, a second information element, a third information element, and a fourth information element. The first information element indicates the dynamic/static attribute of the map element in the first space area, the update frequency of the map information of the first space area, the data format of the map information of the first space area, and the data processing manner of the map information of the first space area. The second information element indicates the three-dimensional space range of the first space area. The third information element indicates the identifier of the first space area. The fourth information element indicates the reference map information, for example, may include the version of the reference map and the supplier of the reference map.

It should be understood that the indication information shown in FIG. 4 is merely an example. As described above, the indication information may include one or more pieces of information listed in FIG. 4. For brevity, details are not described herein again. It should be further understood that a specific structure of the indication information shown in FIG. 4 is merely an example, and the indication information may alternatively have another structure. This application includes but is not limited thereto.

In step 220, the information processing apparatus A generates map information A based on the indication information and the sensing information that is from the sensing device, where the first map information indicates a map element A in the first space area.

The sensing device may be, for example, a sensing device configured in the information processing apparatus A, or may be a sensing device that has a communication connection to the information processing apparatus A. The sensing device may be a device having a data processing capability, or may be a device having no data processing capability. This is not limited in this application.

By way of example but not limitation, the sensing device includes, for example, a roadside device, a terminal device (for example, including but not limited to a vehicle, a vehicle-mounted terminal, or the like), a sensor (for example, including but not limited to a lidar sensor, a millimeter-wave radar sensor, or the like), a camera, a system including a roadside device and a sensor and/or a camera, or a system including a terminal device and a sensor and/or a camera. No enumeration is provided herein.

Because the sensing information collected by the sensing device includes not only sensing information of the first space area, the information processing apparatus A may extract the sensing information or the map element in the first space area based on the three-dimensional space range of the first space area, to generate the map information A. Because the map information A is generated based on the sensing information of the first space area, and the sensing information includes information that is about the map element in the first space area and that is collected in real time, the first map information may indicate the map element A in the first space area.

In a possible implementation, the first sensing information within the three-dimensional space range is extracted from the sensing information based on the three-dimensional space range of the first space area; and the map information A is generated based on the first sensing information and one or more of the dynamic/static attribute, the update frequency, the data format, and the data processing manner. The map information A obtained in this way may indicate the map element A in the first space area.

To be specific, the information processing apparatus A may first exclude, from the sensing information based on space division of the first space area, sensing information that is not in the first space area, to obtain the first sensing information corresponding to the first space area; then perform processing based on the first sensing information, for example, fuse sensing information from different sensing devices, extract sensing information based on fused data; and generate the map information A based on one or more of the dynamic/static attribute, the update frequency, the data format, and the data processing manner.

In another possible implementation, element extraction is performed based on the sensing information to obtain map elements; the map element A within the three-dimensional space range is determined from the map elements based on the three-dimensional space range of the first space area; and the map information A is generated based on the map element A and one or more of the dynamic/static attribute, the update frequency, the data format, and the data processing manner.

To be specific, the information processing apparatus A may first separately perform element extraction on the sensing information from all sensing devices, to obtain map elements extracted from the sensing information of the sensing devices and corresponding space information; then may determine, as the map element A based on the three-dimensional space range of the first space area, a map element within the three-dimensional space range in the map elements previously extracted from the sensing information of the sensing devices; and may fuse data from different sensing devices based on the map element A, and generate first map information A based on one or more of the dynamic/static attribute, the update frequency, the data format, and the data processing manner.

Optionally, when the indication information indicates the dynamic/static attribute of the map element in the first space area, the map element A in the generated map information A has the dynamic/static attribute.

Correspondingly, when the indication information indicates the dynamic/static attribute of the map element in the first space area, the generating the map information A may specifically include: generating the map information A that meets the dynamic/static attribute.

Herein, the map information that meets the dynamic/static attribute may specifically include one or more of the following: The update frequency meets the dynamic/static attribute, the data format meets the dynamic/static attribute, the data processing manner meets the dynamic/static attribute, and an identifier indicating the dynamic/static attribute is carried in the map information.

That the update frequency meets the dynamic/static attribute may mean that the update frequency corresponds to the dynamic/static attribute, and different dynamic/static attributes may correspond to different update frequencies. For example, in descending order of the update frequencies, the dynamic/static attributes may be sequentially a dynamic attribute and a static attribute; or a dynamic attribute, a semi-dynamic attribute, a semi-static attribute, and a static attribute. In this case, the information processing apparatus A may process the sensing information based on the update frequencies corresponding to the dynamic/static attributes, to generate the map information A. In other words, a generation frequency of the map information A may be consistent with an update frequency.

The data format can be designed differently for map elements with different dynamic/static attributes. That the data format meets the dynamic/static attribute may mean that the data format may indicate a map element with a specified dynamic/static attribute, and the generating the map information A that meets the dynamic/static attribute may mean generating map information A based on the data format indicating the map element with the specified dynamic/static attribute. For example, the map information A is generated based on a data format indicating a dynamic element, or the map information A is generated based on a data format indicating a static element. For another example, the map information A is generated based on a data format indicating a dynamic element, or the map information A is generated based on a data format indicating a semi-dynamic element, or the map information A is generated based on a data format indicating a semi-static element, or the map information A is generated based on a data format indicating a static element.

That the data processing manner meets the dynamic/static attribute may mean that the data processing manner corresponds to the dynamic/static attribute. Different data processing manners may be used for different dynamic/static attributes. For example, when map information that meets the dynamic attribute has a high delay requirement, and collected data needs to be processed in real time, an algorithm with a high delay requirement may be used; and when map information that meets the static attribute has a low delay requirement, a complex algorithm with a low delay requirement may be used, or even sensing information at a plurality of time points may be fused.

The map information that meets the dynamic/static attribute is generated, so that the map can be updated more appropriately, and a data processing amount and a data transmission amount are reduced.

Optionally, when the indication information indicates the data format, the generating the map information A may specifically include: generating the first map information A based on the data format.

As described above, the data format indicating the dynamic element includes a field used to carry motion information, and the data format indicating the static element does not include a field used to carry the motion information.

In addition, the data format indicating the dynamic element may further include at least one of the following fields: a field used to carry color information of the dynamic element, a field used to carry geometric information of the dynamic element, and a field used to carry location information of the dynamic element.

The color information indicates a color of the dynamic element, the location information indicates a location of the dynamic element, and the geometric information indicates a shape and/or a size of the dynamic element.

The data format indicating the static element may further include a field used to carry change information. The change information indicates a change of the static element.

Because the static element may also change, for example, a traffic marking line changes from a solid line to a dashed line, or a color of a traffic marking line changes from white to yellow, and this type of change is not frequent, the change may be indicated by the change information.

For example, the change information includes but is not limited to change time, change content, and the like.

Therefore, the map information of the first space area may include one or more of the motion information, the color information, the geometric information, and the location information of the dynamic element; or the map information of the first space area may include the change information of the static element. It should be understood that the dynamic element and the static element may be obtained by performing element extraction based on the sensing information.

In addition to the motion information, the color information, the geometric information, the location information of the dynamic element, and the change information of the static element that are listed above, the map information of the first space area may further include one or more of the following: an identifier of a map element, device information, time information, reference map information, an identifier of the first space area, confidence information, and source information.

The identifier of the map element identifies the map element. The device information indicates a device that uploads the map information of the first space area, for example, the information processing apparatus A that uploads the map information A. The time information indicates upload time of the map information of the first space area. The reference map information indicates a version and/or a supplier of a currently used reference map. The confidence information indicates a reliability degree of the map information of the first space area. The source information indicates the sensing device.

The device information and the source information are indicated, so that a receiving device (an information processing apparatus B or an information processing apparatus C that is mentioned below and that receives the map information A) of the map information of the first space area obtains, through identification, information uploaded by a same device, and may further obtain, through identification, sensing information sensed by the same sensing device, and use the sensing information as an auxiliary information source.

The time information is indicated, so that the receiving device of the map information of the first space area can identify latest information based on the upload time.

The reference map information is indicated, so that the map information receiving device of the first space area can determine the map information of the first space area based on the reference map and the map information of the first space area.

The identifier of the first space area is indicated, so that the receiving device that receives the map information of the first space area can determine the first space area based on the identifier.

The confidence information is indicated, so that the receiving device of the map information of the first space area performs appropriate planning and control based on the confidence information.

In step 230, the information processing apparatus A sends the map information A.

The information processing apparatus A may send the map information A through an existing communication link, so that an apparatus that receives the map information A may process the map information A. Herein, the device that receives the map information A may be, for example, the information processing apparatus B mentioned in the following method 500, or may be the information processing apparatus C mentioned in the following method 600. The apparatus that receives the map information A is not limited in this application.

Optionally, when the indication information indicates the update frequency, step 230 may specifically include: The information processing apparatus A sends the first map information based on the update frequency.

The information processing apparatus A may generate the map information A based on the update frequency, and then send the first map information A; or may generate the map information A each time the sensing information is obtained, and send the map information A based on the update frequency. This is not limited in this application.

It should be understood that, in addition to generating and sending the map information A, the information processing apparatus A may further receive map information from another device, for example, receive map information B from the following information processing apparatus B, and/or receive map information C from the following information processing apparatus C. In addition, the information processing apparatus A may further generate and send map information of other space, and/or receive map information of another space area. This application includes but is not limited thereto.

According to the foregoing technical solution, the indication information indicates the map element or the map information of the first space area. The first space area is a space area obtained through division in the map based on an attribute feature of the map element or the map information. Map elements or map information in the area have/has a common attribute feature. The indication information indicates the map element or the map information of the first space area, so that the information processing apparatus can generate or send the map information in a manner suitable for the common attribute feature. This can relieve pressure caused by an excessively large amount of data on generation, transmission, processing, or the like of the map. The technical solution reflects division of space areas. Some space areas are indicated in a targeted manner, so that a same processing manner is not used for all space areas in the map, and data redundancy caused by a processing manner used to consider all map elements is avoided.

FIG. 5 is a schematic flowchart of an information processing method 500 according to another embodiment of this application. As shown in FIG. 5, the information processing method 500 may include step 510 to step 530. The following describes the steps in the method 500 in detail.

In step 510, an information processing apparatus B obtains indication information, where the indication information indicates at least one of the following content: a dynamic/static attribute of a map element in a first space area, an update frequency of map information of the first space area, a data format transmission format of the map information of the first space area, and a data processing manner of the map information of the first space area.

It should be understood that a specific process of step 510 is similar to that of step 210 in the method 200. For details, refer to related descriptions in step 210. Details are not described herein again.

In step 520, the information processing apparatus B receives map information A, where the map information A indicates a map element A in the first space area.

It may be understood that each device that has a communication link with the information processing apparatus A may receive the map information A. In other words, the information processing apparatus B may be a device that has a communication link with the information processing apparatus A.

As described above, the indication information may indicate one or more of the dynamic/static attribute of the map element in the first space area, the update frequency of the map information of the first space area, the data format of the map information of the first space area, and the data processing manner of the map information of the first space area.

The information processing apparatus B may perform corresponding processing based on different content indicated by the indication information.

For example, step 520 may specifically include step 5201, that is, when the indication information indicates the update frequency, the information processing apparatus B may receive the map information A based on the update frequency.

Because receiving power needs to be consumed each time a signal is received, unnecessary power consumption can be reduced when the map information A is received based on the known update frequency.

For example, the method further includes step 530, that is, when the indication information indicates one or more of the dynamic/static attribute, the data format, and the data processing manner, the information processing apparatus B obtains information about the map element A from the map information A based on the indication information.

Because the map information A is generated based on one or more of the dynamic/static attribute, the data format, and the data processing manner, the information processing apparatus B may process the map information A based on one or more of the dynamic/static attribute, the data format, and the data processing manner, to obtain the information about the map element A from the map information A.

In an example, when the indication information indicates the dynamic/static attribute, the information processing apparatus B may process the map information A based on the dynamic/static attribute.

As described above, when the indication information indicates the dynamic/static attribute, all map elements A in the map information A are map elements having the dynamic/static attribute. In this case, the information processing apparatus B may interpret the map information A based on the dynamic/static attribute, to obtain the information about the map element A.

For example, if the indication information indicates that the dynamic/static attribute of the map element in the first space area is a static attribute or a semi-static attribute, it may be determined that data in the map information A is reported by using a difference, and the map information A may be interpreted based on the reported data. For another example, if the indication information indicates that the dynamic/static attribute of the map element in the first space area is a dynamic attribute, an algorithm with a high delay requirement may be used to process the reported data in real time, to interpret the map information A. For still another example, if the indication information indicates that the dynamic/static attribute of the map element in the first space area is a static attribute, an algorithm with a low delay requirement may be used to process the reported data, to interpret the map information A.

In another example, when the indication information indicates the data format, the information processing apparatus B may process the map information A based on the data format, to obtain the information about the map element A in the map information A.

As described above, the data format may correspond to the dynamic/static attribute. When the data format corresponds to the dynamic/static attribute, the information processing apparatus B may determine a dynamic/static attribute of the first space area based on a data format of the map information A, and further interpret the map information A based on the dynamic/static attribute. For a specific process, refer to the foregoing example. Details are not described herein again.

Certainly, the data format may alternatively not correspond to the dynamic/static attribute. In this case, the information processing apparatus B may interpret the map information A based on the data format indicated by the indication information.

In still another example, when the indication information indicates the data processing manner, the information processing apparatus B may process the map information A based on the data processing manner, to obtain the information about the map element A in the map information A.

As described above, the data processing manner may correspond to the dynamic/static attribute. When the data processing manner corresponds to the dynamic/static attribute, the information processing apparatus B may determine a dynamic/static attribute of the map information A based on a data processing manner of the map information A, and further interpret the map information A based on the dynamic/static attribute. For a specific process, refer to the foregoing example. Details are not described herein again.

Certainly, the data processing manner may alternatively not correspond to the dynamic/static attribute. In this case, the information processing apparatus B may interpret, based on the data processing manner indicated by the indication information, the map information A in a data processing manner corresponding to the data processing manner.

After interpreting the map information A, the information processing apparatus B may perform update, planning and control, and the like on a map held by the information processing apparatus B; or may improve, based on the map information A, a sensing capability, a positioning capability, a planning and control capability, and another capability of the information processing apparatus B. This is not limited in this application.

As described above, the indication information may include a first information element, and one or more of the dynamic/static attribute, the update frequency, the data format, and the data processing manner may be indicated by the first information element. In addition, the indication information may further include a second information element indicating a three-dimensional space range of the first space area; the indication information may further include a third information element indicating an identifier of the first space area; and the indication information may further include a fourth information element indicating a version and/or a supplier of a reference map. For a specific structure of the indication information, refer to the foregoing related descriptions with reference to FIG. 4. Details are not described herein again.

It should be understood that, in addition to receiving the map information A from the information processing apparatus A, the information processing apparatus B may further receive map information from another device, for example, receive map information C from the following information processing apparatus C. In addition, the information processing apparatus B may also have a capability of obtaining sensing information and a capability of processing the sensing information. Therefore, in addition to receiving the map information, the information processing apparatus B may also generate map information B based on the indication information and the obtained sensing information, where the map information B may indicate a map element B in the first space area. In addition, the information processing apparatus B may further generate and send map information of other space, and/or receive map information of another space area.

According to the foregoing technical solution, the indication information indicates the map element or the map information of the first space area. The first space area is a space area obtained through division in the map based on an attribute feature of the map element or the map information. Map elements or map information in the area have/has a common attribute feature. The indication information indicates the map element or the map information of the first space area, so that the information processing apparatus can receive or process the map information in a manner suitable for the common attribute feature. This can relieve pressure caused by an excessively large amount of data on generation, transmission, processing, or the like of the map. The technical solution reflects division of space areas. Some space areas are indicated in a targeted manner, so that a same processing manner is not used for all space areas in the map, and data redundancy caused by a processing manner used to consider all map elements is avoided.

FIG. 6 is a schematic flowchart of an information processing method 600 according to still another embodiment of this application. As shown in FIG. 6, the information processing method 600 may include step 610 to step 640. The following describes the steps in the method 600 in detail.

In step 610, an information processing apparatus C generates indication information, where the indication information indicates at least one of the following content: a dynamic/static attribute of a map element in a first space area, an update frequency of map information of the first space area, a data format of the map information of the first space area, and a data processing manner of the map information of the first space area.

As described above, the information processing apparatus C may divide a space area in a map based on a space distribution feature of the map element, to obtain a plurality of different space areas. The information processing apparatus C may generate the indication information based on the space areas obtained through division. For example, the indication information is generated for the first space area, to indicate one or more of the dynamic/static attribute, the update frequency, the data format, and the data processing manner.

In step 620, the information processing apparatus C sends the indication information.

The information processing apparatus C may send the indication information through an existing communication link. An apparatus that receives the indication information may include, for example, the information processing apparatus A in the method 200, and may alternatively include the information processing apparatus B in the method 500.

Optionally, the method further includes: The information processing apparatus C receives the map information of the first space area in step 630; and
the information processing apparatus C updates the indication information based on the map information of the first space area in step 640.

The map information of the first space area may include but is not limited to the map information A and the map information C that are listed above. The information processing apparatus C may receive at least one of the map information A and the map information C, or may receive map information of a first space area from another device. This application includes but is not limited thereto.

Optionally, the information processing apparatus C may receive and process the map information of the first space area based on the indication information.

For example, the information processing apparatus C may receive the map information of the first space area based on the update frequency indicated by the indication information, or may process the map information of the first space area in the data format and/or the data processing manner indicated by the indication information. For details about how the information processing apparatus C receives the map information of the first space area and processes the map information of the first space area, refer to related descriptions of receiving the map information A and processing the map information A by the information processing apparatus B in the method 500. Details are not described herein.

After parsing the received map information of the first space area, the information processing apparatus C may obtain latest information of the map element in the first space area. Therefore, the information processing apparatus C may update a reference map of a current version based on the map information of the first space area. Because a dynamic element and/or a static element may change in an updated reference map, space distribution features of the dynamic element and the static element may also change. In this case, the information processing apparatus C may further update the indication information based on the updated reference map.

For example, the updating the indication information may include: updating one or more of the dynamic/static attribute of the map element in the first space area, the update frequency of the map information of the first space area, the data format of the map information of the first space area, and the data processing manner of the map information of the first space area.

For example, if the space distribution features of the dynamic element and the static element in the first space area change, and the dynamic/static attribute of the map element in the first space area changes, the dynamic/static attribute of the map element in the first space area may be updated. Correspondingly, if a first information element of the indication information indicates one or more of the dynamic/static attribute of the map element in the first space area, the update frequency of the map information of the first space area, the data format of the map information of the first space area, and the data processing manner of the map information of the first space area, the information processing apparatus C may update corresponding content in the indication information based on an updated dynamic/static attribute of the map element.

For another example, if space distribution features of the dynamic element and the static element in the first space area change, and a three-dimensional space range of the first space area changes and is larger or smaller than a previously indicated three-dimensional space range, a second information element of the indication information may be updated, so that an updated three-dimensional space range better complies with current space distribution features of the dynamic element and the static element.

For another example, if space distribution features of the dynamic element and the static element in the first space area change, and map elements in the first space area no longer have a same dynamic/static attribute, the first space area is no longer suitable for serving as a space area to report the map information. In this case, the indication information may be updated, for example, an indication for an original three-dimensional space range of the first space area may be deleted from the second information element, and an indication for one or more of the dynamic/static attribute, the update frequency, the data format, and the data processing manner may be deleted from the first information element. Alternatively, if the original first space area may be split into two or more space areas, and a map element in each space area corresponds to a dynamic/static attribute, the indication information may be updated. For example, an indication for a new three-dimensional space range may be added on a basis of deleting or updating the indication information corresponding to the original first space area (for example, updating the three-dimensional space range of the first space area in the second information element), and an indication for one or more of a dynamic/static attribute, an update frequency, a data format, and a data processing manner of map information of a corresponding space area may be added to the first information element.

It should be understood that the foregoing enumerated updates of the indication information are only several possible cases. There may be more possible cases for a change in division of space areas that may be caused by changes of space distribution features of the dynamic element and the static element in the first space area, and correspondingly, there may also be a plurality of possible manners for updating the indication information. For brevity, no enumeration is provided herein.

It should be further understood that the information processing apparatus C may also have a capability of obtaining sensing information and a capability of processing the sensing information. Therefore, the information processing apparatus C may also generate map information C based on the indication information and the obtained sensing information, where the map information C may indicate a map element C in the first space area.

In addition, the information processing apparatus C may further generate and send map information of other space, and/or receive map information of another space area. This application includes but is not limited thereto.

According to the foregoing technical solution, the indication information indicates the map element or the map information of the first space area. The first space area is a space area obtained through division in the map based on an attribute feature of the map element or the map information. Map elements or map information in the area have/has a common attribute feature. The indication information indicates the map element or the map information of the first space area, so that the information processing apparatus can receive or process the map information in a manner suitable for the common attribute feature. This can relieve pressure caused by an excessively large amount of data on generation, transmission, processing, or the like of the map. The technical solution reflects division of space areas. Some space areas are indicated in a targeted manner, so that a same processing manner is not used for all space areas in the map, and data redundancy caused by a processing manner used to consider all map elements is avoided.

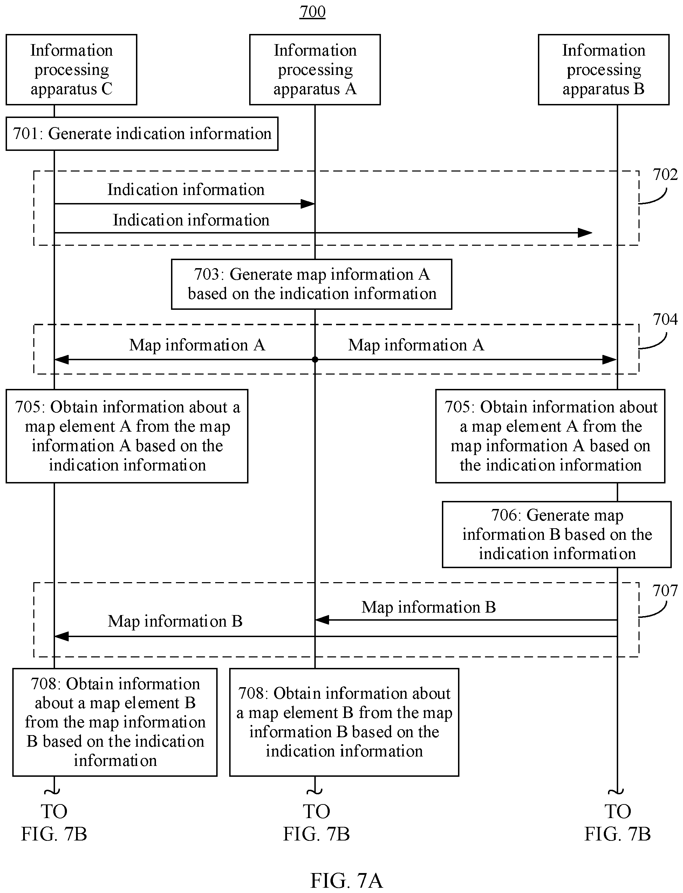

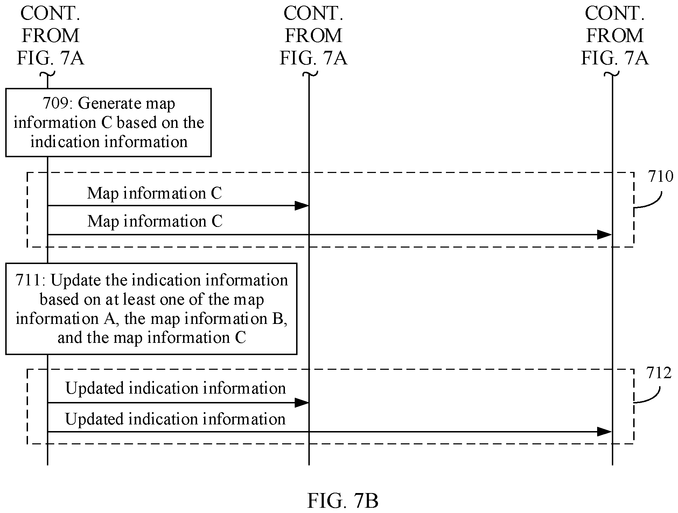

FIG. 7A and FIG. 7B show a method according to an embodiment of this application from a perspective of device interaction. An information processing apparatus A, an information processing apparatus B, and an information processing apparatus C in FIG. 7A and FIG. 7B may respectively correspond to the information processing apparatus A, the information processing apparatus B, and the information processing apparatus C in the method 200, the method 500, and the method 600.

The information processing method 700 shown in FIG. 7A and FIG. 7B may include step 701 to step 712. The following describes the steps in the method 700 in detail.

In step 701, an information processing apparatus C generates indication information, where the indication information indicates at least one of the following content: one or more of a dynamic/static attribute of a map element in a first space area, an update frequency of map information of the first space area, a data format of the map information of the first space area, and a data processing manner of the map information of the first space area.

In step 702, the information processing apparatus C sends the indication information. Correspondingly, the information processing apparatus A and the information processing apparatus B may receive the indication information.

In step 703, the information processing apparatus A generates map information A based on the indication information and sensing information that is from a sensing device, where the map information A may indicate a map element A in the first space area.

In step 704, the information processing apparatus A sends the map information A. Correspondingly, the information processing apparatus B and the information processing apparatus C may receive the map information A.

In step 705, the information processing apparatus B and the information processing apparatus C obtain information about the map element A from the map information A based on the indication information.

It should be understood that processing and use of the map information A by the information processing apparatus B and the information processing apparatus C are related to respective functions of the information processing apparatus B and the information processing apparatus C. This is not limited in this application.

In step 706, the information processing apparatus B generates map information B based on the indication information and the sensing information that is from the sensing device, where the map information B may indicate a map element B in the first space area.

In step 707, the information processing apparatus B sends the map information B. Correspondingly, the information processing A and the information processing apparatus C may receive the map information B.

In step 708, the information processing apparatus A and the information processing apparatus C obtain information about the map element B from the map information B based on the indication information.

In step 709, the information processing apparatus C generates map information C based on the indication information and the sensing information that is from the sensing device, where the map information C may indicate a map element C in the first space area.

In step 710, the information processing apparatus sends the map information C. Correspondingly, the information processing A and the information processing apparatus B may receive the map information C.

In step 711, the information processing apparatus C updates the indication information based on at least one of the map information A, the map information B, and the map information C.

In step 712, the information processing apparatus C sends updated indication information.

It should be understood that, for specific implementation processes of the foregoing steps, refer to the foregoing related descriptions with reference to FIG. 2, FIG. 5, and FIG. 6. Details are not described herein again.

It should be further understood that the procedure shown in FIG. 7A and FIG. 7B is merely an example, and an execution sequence of the steps is not limited in this application. For example, step 709 and step 710 may be performed before step 706 and step 707, may be performed before step 703 and step 704, may be performed synchronously with step 706 and step 707, may be performed synchronously with step 703 and step 704, or may be performed after step 711. Step 703 and step 704 may also be performed before step 706 and step 707, may be performed synchronously with step 706 and step 707, may be performed after step 712, or the like. No enumeration is provided herein.

It should be noted that, if step 709 and step 710 are performed after step 711, the map information C generated by the information processing apparatus C is generated based on the updated indication information. If step 703 and step 704 are performed after step 712, the information processing apparatus C updates the indication information, and the map information on which the indication information is based may include the map information B and/or the map information C, and the map information A generated by the information processing apparatus A is generated based on the updated indication information. Similarly, if step 706 and step 707 are performed after step 712, the information processing apparatus C updates the indication information, and the map information on which the indication information is based may include the map information A and/or the map information C, and the map information B generated by the information processing apparatus B is generated based on the updated indication information. An execution sequence of the steps should be determined according to functions and internal logic of the steps, and shall not constitute any limitation on implementation processes of embodiments of this application.

It should be further understood that processing and use of the received map information by the information processing apparatus A, the information processing apparatus B, and the information processing apparatus C are related to respective functions of the information processing apparatus A, the information processing apparatus B, and the information processing apparatus C. This is not limited in this application.

According to the foregoing technical solution, the indication information indicates the map element or the map information of the first space area. The first space area is a space area obtained through division in the map based on an attribute feature of the map element or the map information. Map elements or map information in the area have/has a common attribute feature. The indication information indicates the map element or the map information of the first space area, so that an information processing apparatus can generate or send the map information in a manner suitable for the common attribute feature, or can receive or process the map information in a manner suitable for the common attribute feature. This can relieve pressure caused by an excessively large amount of data on generation, transmission, processing, or the like of the map. The technical solution reflects division of space areas. Some space areas are indicated in a targeted manner, so that a same processing manner is not used for all space areas in the map, and data redundancy caused by a processing manner used to consider all map elements is avoided.

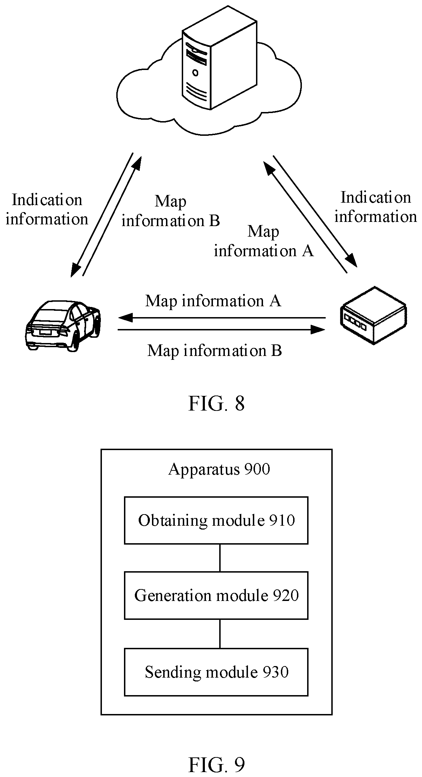

For better understanding of embodiments of this application, FIG. 8 shows a specific embodiment in which a method provided in this application is used. A server in FIG. 8 may be configured to implement a function of the information processing apparatus C in the method 600. A roadside device and a terminal device in FIG. 8 may be configured to implement a function of the information processing apparatus A in the method 200, or may be configured to implement a function of the information processing apparatus B in the method 500.

As shown in FIG. 8, the server generates indication information, and delivers the indication information to the terminal device and/or the roadside device. For example, the server may correspond to the information processing apparatus C listed above. Either the terminal device or the roadside device may collect sensing information, and generate map information of a first space area based on the sensing information and the indication information. The figure shows an example in which the roadside device and the terminal device each generate map information of the first space area. For example, the roadside device may correspond to the information processing apparatus A listed above, and map information of the first space area generated by the roadside device may be, for example, the map information A listed above. For example, the terminal device may correspond to the information processing apparatus B listed above, and map information of the first space area generated by the terminal device may be, for example, the map information B listed above. After generating the map information A, the roadside device may send the map information A to the server and the terminal device. The server and the terminal device each may obtain information about the map element A in the first space area from the map information A based on the indication information. After generating the map information B, the terminal device may also send the map information B to the server and the roadside device. The server and the roadside device each may obtain information about the map element B in the first space area from the map information B based on the indication information. Then, the server may update a reference map based on the map information (for example, the map information A and the map information B) of the first space area, and may perform planning and control based on the map information of the first space area, and the like. The terminal device may improve a sensing capability, a positioning capability, a planning and control capability, and the like of the terminal device based on the map information of the first space area, and may also update a locally stored map based on the map information of the first space area. This is not limited in this application.

Although not shown in FIG. 8, it may be understood that, in addition to information shown in the figure, the server may also generate map information of the first space area based on the indication information and the sensing information. The map information may be, for example, the map information C listed above. The server may also send the generated map information C to the terminal device and the roadside device, so that the terminal device and the roadside device obtain information about the map element C in the first space area from the map information C.

For information generated by each device and processing of the received information, refer to the foregoing related descriptions with reference to FIG. 2 and FIG. 5 to FIG. 7A and FIG. 7B. Details are not described herein again.

According to the foregoing technical solution, the indication information indicates the map element or the map information of the first space area. The first space area is a space area obtained through division in the map based on an attribute feature of the map element or the map information. Map elements or map information in the area have/has a common attribute feature. The indication information indicates the map element or the map information of the first space area, so that an information processing apparatus can generate or send the map information in a manner suitable for the common attribute feature, or can receive or process the map information in a manner suitable for the common attribute feature. This can relieve pressure caused by an excessively large amount of data on generation, transmission, processing, or the like of the map. The technical solution reflects division of space areas. Some space areas are indicated in a targeted manner, so that a same processing manner is not used for all space areas in the map, and data redundancy caused by a processing manner used to consider all map elements is avoided.

The methods provided in embodiments of this application are described above in detail with reference to FIG. 2 to FIG. 8. Apparatuses provided in embodiments of this application are described below in detail with reference to FIG. 9 to FIG. 12.

FIG. 9 is a block diagram of an information processing apparatus according to an embodiment of this application. As shown in FIG. 9, the apparatus 900 may include an obtaining module 910, a generation module 920, and a sending module 930. A function of the information processing apparatus 900 may be implemented by using hardware, software, or a combination of software and hardware.

The obtaining module 910 is configured to obtain indication information, where the indication information includes a first information element, and the first information element indicates at least one of the following content: a dynamic/static attribute of a map element in a first space area, an update frequency of the first space area, a data format of the first space area, and a data processing manner of the first space area. The generation module 920 is configured to generate first map information based on the indication information and sensing information that is from a sensing device, where the first map information indicates the map element in the first space area. The sending module 930 is configured to send the first map information.

It should be understood that the apparatus 900 may include modules configured to perform the procedures and/or steps corresponding to the information processing apparatus A in the method 200 and the method 700. For brevity, details are not described herein again.

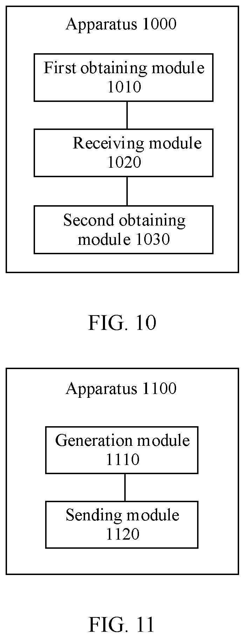

FIG. 10 is a block diagram of another information processing apparatus according to an embodiment of this application. As shown in FIG. 10, the apparatus 1000 may include a first obtaining module 1010 and a receiving module 1020. A function of the information processing apparatus 1000 may be implemented by using hardware, software, or a combination of software and hardware.

The first obtaining module 1010 is configured to obtain indication information, where the indication information includes a first information element, and the first information element indicates at least one of the following content: a dynamic/static attribute of a map element in a first space area, an update frequency of map information of the first space area, a data format of the map information of the first space area, and a data processing manner of the map information of the first space area. The receiving module 1020 is configured to receive first map information, where the first map information indicates a first map element in the first space area. When the first information element indicates at least one of the dynamic/static attribute, the data format, and the data processing manner, the apparatus further includes a second obtaining module 1030, configured to obtain information about the first map element from the first map information based on the indication information. When the first information element indicates the update frequency, the receiving module 1020 is specifically configured to receive the first map information based on the update frequency.

It should be understood that the apparatus 1000 may include modules configured to perform the procedures and/or steps corresponding to the information processing apparatus B in the method 500 and the method 700. For brevity, details are not described herein again.

FIG. 11 is a block diagram of still another information processing apparatus 1100 according to this application. As shown in FIG. 11, the apparatus 1100 may include a generation module 1110 and a sending module 1120.

The generation module 1110 is configured to generate indication information, where the indication information includes a first information element, and the first information element indicates at least one of the following content: a dynamic/static attribute of a map element in a first space area, an update frequency of map information of the first space area, a data format of the map information of the first space area, and a data processing manner of the map information of the first space area. The sending module 1120 is configured to send the indication information.

It should be understood that the apparatus 1100 may include modules configured to perform the procedures and/or steps corresponding to the information processing apparatus C in the method 600 and the method 700. For brevity, details are not described herein again.

It should be further understood that module division in embodiments of this application is an example, and is merely logical function division. There may be another division manner during actual implementation. In addition, functional modules in embodiments of this application may be integrated into one processor, or may exist alone physically, or two or more modules may be integrated into one module. The integrated module may be implemented in a form of hardware, or may be implemented in a form of a software functional module.

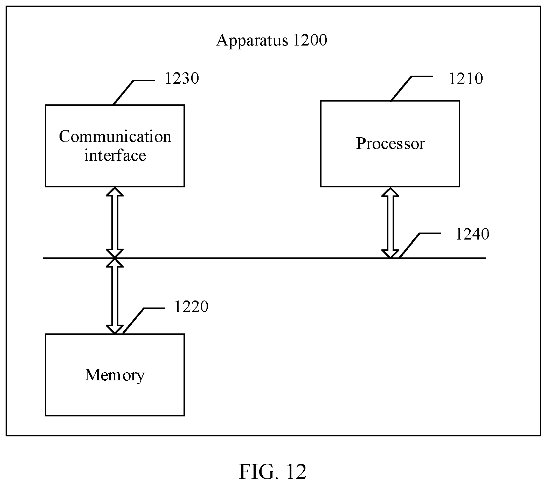

FIG. 12 is another block diagram of an information apparatus according to an embodiment of this application. As shown in FIG. 12, the apparatus 1200 includes a processor 1210 and a memory 1220. The memory 1220 may be configured to store a computer program. The processor 1210 may be configured to invoke and execute the computer program, so that the apparatus implements functions of the information processing apparatus A, the information processing apparatus B, and the information processing apparatus C in the methods according to embodiments of this application.

Optionally, the apparatus 1200 may further include a communication interface 1230. The communication interface 1230 may be a transceiver, an interface, a bus, a circuit, or an apparatus that can implement receiving and sending functions. The communication interface 1230 is configured to communicate with another device through a transmission medium, so that an apparatus used in the apparatus 1200 can communicate with the another device.

In an example, if the apparatus 1200 corresponds to the information processing apparatus A in the foregoing method embodiment, the processor 1210 may be configured to obtain indication information, where the indication information includes a first information element, and the first information element indicates at least one of the following content: a dynamic/static attribute of a map element in a first space area, an update frequency of map information of the first space area, a data format of the map information of the first space area, and a data processing manner of the map information of the first space area; may be configured to generate first map information based on the indication information and sensing information that is from a sensing device, where the first map information indicates a first map element in the first space area; and may be further configured to control the communication interface 1230 to send the first map information. For details, refer to detailed descriptions in the method 200 and the method 700. Details are not described herein.

In another example, if the apparatus 1200 corresponds to the information processing apparatus B in the foregoing method embodiment, the processor 1210 may be configured to obtain indication information, where the indication information includes a first information element, and the first information element indicates at least one of the following content: a dynamic/static attribute of a map element in a first space area, an update frequency of map information of the first space area, a data format of the map information of the first space area, and a data processing manner of the map information of the first space area; and may be further configured to control the communication interface 1230 to receive first map information, where the first map information indicates a first map element in the first space area. When the first information element indicates at least one of the dynamic/static attribute, the data format, and the data processing manner, the processor 1210 is further configured to obtain information about the first map element from the first map information based on the indication information. When the first information element indicates the update frequency, the processor 1210 is further configured to control the communication interface 1230 to receive the first map information based on the update frequency. For details, refer to detailed descriptions in the method 500 and the method 700. Details are not described herein.

In still another example, if the apparatus 1200 corresponds to the information processing apparatus C in the foregoing method embodiment, the processor 1210 may be configured to generate indication information, where the indication information includes a first information element, and the first information element indicates at least one of the following content: a dynamic/static attribute of a map element in a first space area, an update frequency of map information of the first space area, a data format of the map information of the first space area, and a data processing manner of the map information of the first space area; and may be further configured to control the communication interface 1230 to send the indication information. For details, refer to detailed descriptions in the method 600 and the method 700. Details are not described herein.

The coupling in embodiments of this application may be an indirect coupling or a communication connection between apparatuses, units, or modules in an electrical form, a mechanical form, or another form, and is used for information exchange between the apparatuses, the units, or the modules. The processor 1210 may perform a cooperative operation with the memory 1220. The processor 1210 may execute program instructions stored in the memory 1220. At least one of the at least one memory may be included in the processor.

A specific connection medium between the processor 1210, the memory 1220, and the communication interface 1230 is not limited in embodiments of this application. In this embodiment of this application, the memory 1220, the processor 1210, and the communication interface 1230 are connected to each other through a bus 1240 in FIG. 10. The bus is represented by a bold line in FIG. 12. A manner of a connection between other components is merely an example for description, and is not limited thereto. The bus may be classified into an address bus, a data bus, a control bus, and the like. For ease of representation, only one bold line indicates the bus in FIG. 12, but this does not mean that there is only one bus or only one type of bus.

It should be noted that the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by a combination of hardware and software modules in a decoding processor. A software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps of the foregoing method in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification is intended to include but not limited to these memories and any memory of another appropriate type.

This application provides a communication system, including a first information processing apparatus and a second information processing apparatus. The first information processing apparatus is configured to implement the method performed by the information processing apparatus A in the embodiment shown in FIG. 2 or FIG. 7A and FIG. 7B, and the second information processing apparatus may be configured to implement the method performed by the information processing apparatus C in the embodiment shown in FIG. 6 or FIG. 7A and FIG. 7B. Optionally, the communication system further includes a third information processing apparatus, configured to implement the method performed by the information processing apparatus B in the embodiment shown in FIG. 5 or FIG. 7A and FIG. 7B.

This application further provides a computer-readable storage medium. The computer-readable storage medium stores a computer program. When the computer program is executed by a processor, the method performed by the information processing apparatus A in the embodiment shown in FIG. 2 or FIG. 7A and FIG. 7B, the method performed by the information processing apparatus B in the embodiment shown in FIG. 5 or FIG. 7A and FIG. 7B, or the method performed by the information processing apparatus C in the embodiment shown in FIG. 6 or FIG. 7A and FIG. 7B is implemented.

This application further provides a computer program product, including a computer program. When the computer program is run, the method performed by the information processing apparatus A in the embodiment shown in FIG. 2 or FIG. 7A and FIG. 7B, the method performed by the information processing apparatus B in the embodiment shown in FIG. 5 or FIG. 7A and FIG. 7B, or the method performed by the information processing apparatus C in the embodiment shown in FIG. 6 or FIG. 7A and FIG. 7B is implemented.

Terms such as "unit" and "module" used in this specification may indicate computer-related entities, hardware, firmware, combinations of hardware and software, software, or software being executed.

A person of ordinary skill in the art may be aware that, in combination with illustrative logical blocks (illustrative logical blocks) described in embodiments disclosed in this specification and steps (steps), this application may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In several embodiments provided in this application, it should be understood that the disclosed apparatuses, devices, and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on an actual requirement to achieve the objectives of the solutions in embodiments.

In addition, functional units in embodiments of this application may be integrated into one processing unit, each of the units may exist alone physically, or two or more units are integrated into one unit.

In the foregoing embodiments, all or some of the functions of the functional units may be implemented by using software, hardware, firmware, or any combination thereof. When software is used for implementation, all or some of embodiments may be implemented in a form of a computer program product. The computer program product includes one or more computer instructions (programs). When the computer program instructions (programs) are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state disk (solid-state drive, SSD)), or the like.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information processing method, comprising:
obtaining indication information, wherein the indication information comprises a first information element, and the first information element indicates at least one of the following content: a dynamic/static attribute of a map element in a first space area, an update frequency of map information of the first space area, a data format of the map information of the first space area, and a data processing manner of the map information of the first space area;
generating first map information based on the indication information and sensing information that is from a sensing device, wherein the first map information indicates a first map element in the first space area; and
sending the first map information.

2. The method according to claim 1, wherein the indication information further comprises a second information element, and the second information element indicates a three-dimensional space range of the first space area.

3. The method according to claim 2, wherein the generating first map information based on the indication information and sensing information that is from a sensing device comprises:
extracting first sensing information within the three-dimensional space range from the sensing information based on the second information element; and
generating the first map information based on the first information element and the first sensing information.

4. The method according to any one of claims 1 to 3, wherein the obtaining indication information comprises: generating the indication information or receiving the indication information.

5. The method according to any one of claims 1 to 4, wherein the dynamic/static attribute is one of a dynamic attribute and a static attribute, or one of a dynamic attribute, a semi-dynamic attribute, a semi-static attribute, and a static attribute; and
when the first information element indicates the dynamic/static attribute, the first map element has the dynamic/static attribute.

6. The method according to any one of claims 1 to 5, wherein the data format is a data format indicating a static element or a data format indicating a dynamic element; and
when the first information element indicates the data format,
the generating first map information comprises: generating the first map information having the data format; and/or
the sending the first map information comprises: sending the first map information in the data format.

7. The method according to any one of claims 1 to 6, wherein when the indication information indicates the update frequency, the sending the first map information comprises:
sending the first map information based on the update frequency.

8. The method according to any one of claims 1 to 7, wherein the indication information further indicates an identifier of the first space area, and the identifier of the first space area identifies the first space area in a map; and/or
the indication information further indicates reference map information, and the reference map information indicates a version and/or a supplier of a map on which the indication information is based.

9. The method according to any one of claims 1 to 8, wherein the method further comprises:
receiving second map information, wherein the second map information indicates a second map element in the first space area;
when the first information element indicates at least one of the dynamic/static attribute, the data format, and the data processing manner, the method further comprises: obtaining information about the second map element from the second map information based on the indication information; and
when the first information element indicates the update frequency, the receiving second map information comprises: receiving the second map information based on the update frequency.

10. An information processing method, comprising:
obtaining indication information, wherein the indication information comprises a first information element, and the first information element indicates at least one of the following content: a dynamic/static attribute of a map element in a first space area, an update frequency of map information of the first space area, a data format of the map information of the first space area, and a data processing manner of the map information of the first space area; and
receiving first map information, wherein the first map information indicates a first map element in the first space area, wherein
when the first information element indicates at least one of the dynamic/static attribute, the data format, and the data processing manner, the method further comprises: obtaining information about the first map element from the first map information based on the indication information; and
when the first information element indicates the update frequency, the receiving first map information comprises: receiving the first map information based on the update frequency.

11. The method according to claim 10, wherein the indication information further comprises a second information element, and the second information element indicates a three-dimensional space range of the first space area.

12. The method according to claim 11, wherein the method further comprises:
obtaining the information about the first map element within the three-dimensional space range from the first map information based on the second information element.

13. The method according to any one of claims 10 to 12, wherein the obtaining indication information comprises: generating the indication information or receiving the indication information.

14. The method according to any one of claims 10 to 13, wherein the dynamic/static attribute is one of a dynamic attribute and a static attribute, or one of a dynamic attribute, a semi-dynamic attribute, a semi-static attribute, and a static attribute.

15. The method according to any one of claims 10 to 14, wherein the data format is a data format indicating a static element or a data format indicating a dynamic element.

16. The method according to any one of claims 10 to 15, wherein the indication information further indicates an identifier of the first space area, and the identifier of the first space area identifies the first space area in a map; and/or
the indication information further indicates reference map information, and the reference map information indicates a version and/or a supplier of a map on which the indication information is based.

17. The method according to any one of claims 10 to 16, wherein the method further comprises:
generating second map information based on the indication information and sensing information that is from a sensing device, wherein the second map information indicates a second map element in the first space area; and
sending the second map information.

18. An information processing method, comprising:
generating indication information, wherein the indication information comprises a first information element, and the first information element indicates at least one of the following content: a dynamic/static attribute of a map element in a first space area, an update frequency of map information of the first space area, a data format of the map information of the first space area, and a data processing manner of the map information of the first space area; and
sending the indication information.

19. The method according to claim 18, wherein the indication information further comprises a second information element, and the second information element indicates a three-dimensional space range of the first space area.

20. The method according to claim 18 or 19, wherein the dynamic/static attribute is one of a dynamic attribute and a static attribute, or one of a dynamic attribute, a semi-dynamic attribute, a semi-static attribute, and a static attribute.

21. The method according to any one of claims 18 to 20, wherein the data format is a map data format indicating a static element or a map data format indicating a dynamic element.

22. The method according to any one of claims 18 to 21, wherein the method further comprises:
generating first map information based on the indication information and sensing information that is from a sensing device, wherein the first map information indicates a first map element in the first space area; and
sending the first map information.

23. The method according to any one of claims 18 to 22, wherein the method further comprises:
receiving second map information, wherein the second map information indicates a second map element in the first space area; and
when the first information element indicates at least one of the dynamic/static attribute, the data format, and the data processing manner, the method further comprises: obtaining information about the second map element from the second map information based on the indication information; and
when the first information element indicates the update frequency, the receiving second map information comprises: receiving the second map information based on the update frequency.

24. The method according to claim 23, wherein the method further comprises:
updating the indication information based on the second map information.

25. An information processing apparatus, comprising a processor and a memory, wherein the memory is configured to store a computer program, and the processor is configured to execute the computer program, so that the apparatus implements the method according to any one of claims 1 to 9.

26. An information processing apparatus, comprising:
a first obtaining module, configured to obtain indication information, wherein the indication information comprises a first information element, and the first information element indicates at least one of the following content: a dynamic/static attribute of a map element in a first space area, an update frequency of map information of the first space area, a data format of the map information of the first space area, and a data processing manner of the map information of the first space area;
a first generation module, configured to generate first map information based on the indication information and sensing information that is from a sensing device, wherein the first map information indicates a first map element in the first space area; and
a sending module, configured to send the first map information.

27. The apparatus according to claim 26, wherein the indication information further comprises a second information element, and the second information element indicates a three-dimensional space range of the first space area.

28. The apparatus according to claim 27, wherein the first generation module is specifically configured to:
extract first sensing information within the three-dimensional space range from the sensing information based on the second information element; and
generate the first map information based on the first information element and the first sensing information.

29. The apparatus according to any one of claims 26 to 28, wherein the first obtaining module comprises a second generation module configured to generate the indication information; or a first receiving module configured to receive the indication information.

30. The apparatus according to any one of claims 26 to 29, wherein the dynamic/static attribute is one of a dynamic attribute and a static attribute, or one of a dynamic attribute, a semi-dynamic attribute, a semi-static attribute, and a static attribute; and
when the indication information indicates the dynamic/static attribute, the first map element has the dynamic/static attribute.

31. The apparatus according to any one of claims 26 to 30, wherein the data format is a data format indicating a static element or a data format indicating a dynamic element; and
when the first information element indicates the data format, the first generation module is specifically configured to generate the first map information having the data format; and/or the sending module is specifically configured to send the first map information in the data format.

32. The apparatus according to any one of claims 26 to 31, wherein when the indication information indicates the update frequency, the sending module is specifically configured to send the first map information based on the update frequency.

33. The apparatus according to any one of claims 26 to 32, wherein the indication information further indicates an identifier of the first space area, and the identifier of the first space area identifies the first space area in a map; and/or
the identifier of the first space area further indicates reference map information, and the reference map information indicates a version and/or a supplier of a reference map.

34. The apparatus according to any one of claims 26 to 33, wherein the apparatus further comprises a second receiving module and a second obtaining module, wherein
the second receiving module is configured to receive second map information, wherein the second map information indicates a second map element in the first space area;
when the first information element indicates at least one of the dynamic/static attribute, the data format, and the data processing manner, the second obtaining module is further configured to obtain information about the second map element from the second map information based on the indication information; and
when the first information element indicates the update frequency, the second receiving module is configured to receive the second map information based on the update frequency.

35. An information processing apparatus, comprising a processor and a memory, wherein the memory is configured to store a computer program, and the processor is configured to execute the computer program, so that the apparatus implements the method according to any one of claims 10 to 17.

36. An information processing apparatus, comprising:
a first obtaining module, configured to obtain indication information, wherein the indication information comprises a first information element, and the first information element indicates at least one of the following content: a dynamic/static attribute of a map element in a first space area, an update frequency of map information of the first space area, a data format of the map information of the first space area, and a data processing manner of the map information of the first space area; and
a first receiving module, configured to receive first map information, wherein the first map information indicates a first map element in the first space area, wherein
when the first information element indicates at least one of the dynamic/static attribute, the data format, and the data processing manner, the apparatus further comprises a second obtaining module, configured to obtain information about the first map element from the first map information based on the indication information; and
when the first information element indicates the update frequency, the first receiving module is specifically configured to receive the first map information based on the update frequency.

37. The apparatus according to claim 36, wherein the indication information further comprises a second information element, and the second information element indicates a three-dimensional space range of the first space area.

38. The apparatus according to claim 37, wherein the second obtaining module is specifically configured to obtain the information about the first map element within the three-dimensional space range from the first map information based on the second information element.

39. The apparatus according to any one of claims 36 to 38, wherein the first obtaining module comprises a generation module configured to generate the indication information; or a second receiving module configured to receive the indication information.

40. The apparatus according to any one of claims 36 to 39, wherein the dynamic/static attribute is one of a dynamic attribute and a static attribute, or one of a dynamic attribute, a semi-dynamic attribute, a semi-static attribute, and a static attribute.

41. The apparatus according to any one of claims 36 to 40, wherein the data format is a data format indicating a static element or a data format indicating a dynamic element.

42. The apparatus according to any one of claims 36 to 41, wherein the indication information further indicates an identifier of the first space area, and the identifier of the first space area identifies the first space area in a map; and/or
the indication information further indicates reference map information, and the reference map information indicates a version and/or a supplier of a map on which the indication information is based.

43. The apparatus according to any one of claims 36 to 42, wherein the apparatus further comprises:
a generation module, configured to generate second map information based on the indication information and sensing information that is from a sensing device, wherein the second map information indicates a second map element in the first space area; and
a sending module, configured to send the second map information.

44. An information processing apparatus, comprising a processor and a memory, wherein the memory is configured to store a computer program, and the processor is configured to execute the computer program, so that the apparatus implements the method according to any one of claims 18 to 24.

45. An information processing apparatus, comprising:
a first generation module, configured to generate indication information, wherein the indication information comprises a first information element, and the first information element indicates at least one of the following content: a dynamic/static attribute of a map element in a first space area, an update frequency of map information of the first space area, a data format of the map information of the first space area, and a data processing manner of the map information of the first space area; and
a first sending module, configured to send the indication information.

46. The apparatus according to claim 45, wherein the indication information further comprises a second information element, and the second information element indicates a three-dimensional space range of the first space area.

47. The apparatus according to claim 45 or 46, wherein the dynamic/static attribute is one of a dynamic attribute and a static attribute, or one of a dynamic attribute, a semi-dynamic attribute, a semi-static attribute, and a static attribute.

48. The apparatus according to any one of claims 45 to 47, wherein the data format is a map data format indicating a static element or a map data format indicating a dynamic element.

49. The apparatus according to any one of claims 45 to 48, wherein the apparatus further comprises:
a second generation module, configured to generate first map information based on the indication information and sensing information that is from a sensing device, wherein the first map information indicates a first map element in the first space area; and
a second sending module, configured to send the first map information.

50. The apparatus according to any one of claims 45 to 49, wherein the apparatus further comprises a receiving module, configured to receive second map information, wherein the second map information indicates a second map element in the first space area, wherein
when the first information element indicates at least one of the dynamic/static attribute, the data format, and the data processing manner, the apparatus further comprises an obtaining module, configured to obtain information about the second map element from the second map information based on the indication information; and
when the first information element indicates the update frequency, the receiving module is specifically configured to receive the second map information based on the update frequency.

51. The apparatus according to claim 50, wherein the first generation module is further configured to update the indication information based on the second map information.

52. A vehicle, comprising the apparatus according to any one of claims 25 to 51.

53. A communication system, comprising:
a first information processing apparatus, configured to implement the method according to any one of claims 1 to 9; and
a second information processing apparatus, configured to implement the method according to any one of claims 18 to 24.

54. The communication system according to claim 53, further comprising a third information processing apparatus, configured to implement the method according to any one of claims 10 to 17.

55. A computer-readable storage medium, wherein the computer-readable storage medium stores a computer program, and when the computer program is executed by a processor, the method according to any one of claims 1 to 24 is implemented.

56. A computer program product, comprising a computer program, wherein when the computer program is run, the method according to any one of claims 1 to 24 is implemented.
